# EUROPEAN PATENT APPLICATION

(11) **EP 2 131 439 A1**
(43) Date of publication of application: **09.12.2009**
(21) Application number: 08722170.1
(22) Date of filing: 14.03.2008
(51) Int. Cl.: H01M 10/06, H01M 4/68, H01M 10/08

(54) **LEAD STORAGE CELL AND BATTERY**

(30) Priority: 15.03.2007 JP 2007066933
(71) Applicant: GS Yuasa Corporation, Kyoto-shi, Kyoto 601-8520 (JP)
(72) Inventor: FUJITA, Kohei, Kyoto-shi Kyoto 601-8520 (JP); KURISAWA, Isamu, Kyoto-shi Kyoto 601-8520 (JP)
(74) Representative: Müller-Boré & Partner Patentanwälte
(86) International application number: PCT/JP2008/054774
(87) International publication number: WO 2008/114738

(57) **Abstract**

Alead-acid battery 10 of the invention includes a positive electrode plate 30 and an electrolyte solution and the positive electrode plate 30 has a positive substrate 33 bearing a tin dioxide layer on the surface thereof. In the lead-acid battery 10 of the invention, since the electrolyte solution has a specific gravity in a range of 1.250 to 1.500 at 20°C in a fully charged state, the potential in the vicinity of a positive current collector 31 can be prevented from considerable temporary decrease at the time of high rate discharge and dissolution of the tin dioxide layer on the surface of the substrate 33 and deterioration of the positive electrode plate 30 can be prevented and therefore, the lead-acid battery 10 is provided with a long life.

## Description

### TECHNICAL FIELD

The invention relates to a lead-acid battery using a positive substrate bearing a tin dioxide layer on the surface thereof for a positive electrode plate and an assembled battery.

### BACKGROUND ART

Along with expansion of terrestrial digital broadcasting, a demand for back-up power sources for emergency to be used in relay base stations and parent stations has been increased and batteries to be used for these power sources are required to be excellent in life performance at high rate discharge of 3CA to 5CA (C: 20 hour rate-rated capacity) in float charging and tricle charging.

However, with respect to presently available lead-acid batteries including positive current collectors made of lead or lead alloys, there is a problem that the capacity along with the use period at high rate discharge in float charging and tricle charging considerably decreases and thus the lives are terminated quickly. The cause of quickly terminating the lives of these lead-acid batteries is corrosion of the positive current collectors and it has been an object in terms of further improvement of the life performance at high rate discharge.

Therefore, as a countermeasure for further improving the life performance of a lead-acid battery at high rate discharge, it has been proposed to prolong the lives by using materials obtained by forming conductive ceramic protection films excellent in corrosion resistance on the surfaces of substrates made of metals as positive current collectors (for example, see Patent Documents 1 and 2). The following Patent Documents 1 and 2 describe positive current collectors obtained by forming thin tin dioxide films on the surfaces of substrates made of, for example, titanium.

Covering the surface of a substrate as described above with a conductive ceramic protection film such as a tin dioxide film prevents titanium, the substrate material, from being passivated and the low conductivity of the tin dioxide film is compensated by this substrate material, titanium.
Patent Document 1: Japanese Patent Application Laid-Open (JP-A) No. 7-65821
Patent Document 2: International Publication WO 07/37382 pamphlet

### DISCLOSUER OF THE INVENTION

### (PROBLEM TO BE SOLVED BY THE INVENTION)

However, with respect to a lead-acid battery using a positive current collector bearing a tin dioxide film on the surface of a substrate for a positive electrode plate, the sulfate ions in the fine pores of the positive active material (lead dioxide) having contact with the positive current collector at the time of high rate discharge are preferentially consumed and water is produce by the discharge reaction, so that the specific gravity of the electrolyte solution is sharply decreased in the fine pores of the positive active material and the potential in the vicinity of the positive current collector having contact with the positive active material is considerably decreased.

Further, with respect to a lead-acid battery bearing a tin dioxide film on the substrate surface, since no chemical bonding reaction is generated between a current collector and a positive active material (lead dioxide), using high repulsive force obtained at the time of high compression of a separator interposed between the positive electrode plate and the negative electrode plate in the thickness direction, the positive current collector and the positive active material are physically pressed at a constant pressing force to attain the adhesiveness of each other. As a result, the pressing force reaches about 5 to 20 times as high as that of a lead-acid battery using a lead or lead alloy for a current collector and the porosity of the separator is lowered by about 20 to 40% than that of a lead-acid battery using a lead or lead alloy for a current collector.

The diffusion and transfer rate of the electrolyte solution into the fine pores of the positive active material (lead dioxide) from the separator with a decreased fine pore volume by the high pressing force is extremely slow and the potential in the vicinity of the positive current collector which is considerably lowered temporarily at the time of high rate discharge cannot be recovered soon. Therefore, there has been a problem that at the time of high rate discharge of the lead-acid battery, a portion of the tin dioxide film on the substrate surface is reduced at the potential to be dissolved in the form of an Sn²⁺ ion in the electrolyte solution and accordingly, the positive current collector is deteriorated to result in shortening of the life.

In view of the above state of the art, an object of the invention is to provide a lead-acid battery comprising a positive substrate bearing a tin dioxide layer on the surface thereof, wherein the life performance at the time of high rate discharge is improved by suppressing considerable temporal decrease of the potential in the vicinity of the positive current collector at the time of high rate discharge and lowering the deterioration of the positive current collector due to dissolution of the tin dioxide layer formed on the substrate surface.

### (MEANS FOR SOLVING THE PROBLEMS)

As a result of serious investigations carried out to solve the above-mentioned problems, the inventors of the invention have found that the potential in the vicinity of the positive current collector at the time of high rate discharge can be prevented from remarkable temporal decrease when an electrolyte solution having certain specific gravity is used as the electrolyte solution for the lead-acid battery including a positive substrate in which a tin oxide layer is formed on the surface thereof.
That is, the invention provides a lead-acid battery having a positive electrode plate and an electrolyte solution, wherein the positive electrode plate includes a positive substrate bearing a tin dioxide layer on the surface thereof and the electrolyte solution has a specific gravity in a range of 1.250 to 1.500 at 20°C in a fully charged state, and an assembled battery obtained by connecting a plurality of the above-mentioned lead-acid batteries, wherein the positive electrode terminal of the lead-acid battery is connected in series with the negative electrode terminal of a neighboring lead-acid battery so as to be in contact with each other.

In the invention, the fully charged state means the same state as full charge defined in JIS C 8704-2-1.
In the invention, with respect to the lead-acid battery having a positive electrode plate including a positive substrate bearing a tin dioxide layer on the surface thereof, since the electrolyte solution having a specific gravity in a range of 1.250 to 1.500 at 20°C in a fully charged state is used, temporal considerable decrease of the potential in the vicinity of the positive current collector at the time of high rate discharge can be prevented. Consequently, according to the invention, since dissolution of the tin dioxide layer on the substrate surface and deterioration of the positive electrode plate can be prevented and thus a lead-acid battery with a long life can be provided.

The invention may have the following configuration.
The above-mentioned positive substrate may be made of titanium or an alloy containing titanium.
When the above-mentioned configuration is made, since titanium contained in the positive substrate is excellent in resistance to sulfuric acid, the life performance of the battery can be more improved. Further, if a substrate made of titanium or a titanium alloy is employed, a tin dioxide layer can be formed by a coating-thermal decomposition method, one of wet processes economical in the capital-investment spending as compared with that for dry processes, and the cost can be reduced and thus it is preferable.

A lead-acid battery having a separator retaining the above-mentioned electrolyte solution, a negative electrode plate arranged opposite to the positive electrode plate with the separator interposed therebetween, and a battery container for storing the positive electrode plate, the separator, and the negative electrode plate: wherein the positive electrode plate has a positive substrate including a positive active material on one face, and in the positive substrate, the above-mentioned tin dioxide layer is formed at least on the face including the positive active material of the positive substrate and the tin dioxide layer formed on the face including the tin dioxide layer is brought into contact with the positive active material; the negative electrode plate includes a negative substrate and a negative active material in one face side of the negative substrate; the positive substrate and the negative substrate are arranged in the outer side of the positive active material and the negative active material by layering the positive active material, the separator, and the negative active material in this order; the battery container includes an insulating container main body surrounding the positive active material, the separator, and the negative active material and having a form opened in parts where the positive substrate and the negative substrate are arranged; and the positive substrate and the negative substrate may also be served as parts of the battery container.

When the above-mentioned configuration is made, since the substrates are served as parts of the battery container, the weight can be trimmed and the steam barrier property can be improved and increase of the inner resistance and decrease of the output performance along with dry out deterioration due to steam permeation can be suppressed and therefore, it is preferable.

The negative substrate is made of lead or a lead-plated copper and the negative substrate may have contact with the negative active material.
When the above-mentioned configuration is made, the negative substrate becomes excellent in corrosion resistance and it is made possible to provide a long life lead-acid battery and therefore, it is preferable.

The negative electrode plate may be provided with a carbon material-containing conductive resin film between the negative substrate and the negative active material and the negative substrate may be made of any one of copper, lead, tin, and zinc or made of an alloy containing two or more kinds of these metals.

When the above-mentioned configuration is made, since the negative substrate is kept from direct contact with the negative active material and the electrolyte solution, corrosion and dissolution of the substrate can be prevented and the life performance can be more improved and also weight increase due to lead plating or cost up due to plating process can be avoided and therefore, it is preferable.
Further, in the above-mentioned configuration, since the negative substrate is made of any one of copper, lead, tin, and zinc or made of an alloy containing two or more kinds of these metals which have low contact resistance with the carbon material- containing conductive film, it is made possible to obtain a lead-acid battery with low inner resistance and excellent in output performance and therefore, it is preferable.

The negative substrate may be a substrate made of a carbon material-containing conductive resin. When the configuration is made, it is made possible to obtain a lightweight lead-acid battery and therefore, it is preferable.

In this configuration, the average thickness of the substrate of the carbon material-containing conductive resin may be 80 µm or thicker and 1 mm or thinner. When this configuration is made, a sufficient steam barrier property can be obtained and the inner resistance can be more lowered and therefore, it is preferable. In addition, the thickness of the substrate made of the conductive resin means the value measured according to JIS L 1096.

The negative substrate is made of titanium or a titanium-containing alloy and the negative electrode plate may be configured in a manner that the negative substrate, a tin dioxide layer having an average thickness of 10 nm or thicker and 50 µm or thinner and containing antimony, a carbon material-containing conductive resin film, and the negative active material are successively layered. In addition, the thickness of the tin dioxide layer means the value measured according to JIS H 8501 in the invention.
In a lead-acid battery provided with a prolonged life, a positive substrate made of titanium or a titanium alloy is often used. In an assembled battery, in a case where the substrates for the negative electrode and the positive electrode are different kinds of metals, if salt water or the like penetrates the points connecting in series positive electrodes and negative electrodes of neighboring batteries, galvanic corrosion attributed to the contact between different kinds of metals may occur; however if titanium or a titanium alloy is used for the negative substrate, it is the same material as the positive substrate and therefore, the galvanic corrosion can be suppressed and it is preferable.

However, if a carbon material-containing conductive resin film is used while directly being layered on the negative substrate made of titanium or a titanium alloy, a problem that the contact resistance becomes higher than that of the case of using a negative substrate made of another material is generated.
As a result of investigations carried out seriously to solve this problem, it is found that the contact resistance can considerably be lowered by forming an antimony-containing tin dioxide layer with a thickness of 10 nm or thicker between the negative substrate and the carbon material-containing conductive resin film.

Therefore, if the antimony-containing tin dioxide layer with a thickness of 10 nm or thicker is formed between the substrate made of a titanium alloy and the carbon material-containing conductive resin film, the galvanic corrosion can be suppressed and the inner resistance can be lowered and therefore, it is preferable.

In this configuration, if tin dioxide layer is formed on both faces of the negative substrate, the inner resistance can be more lowered and therefore, it is more preferable.
In this configuration, if the average thickness of the tin dioxide layer of the negative substrate is 10 nm or thicker and 50 µm or thinner, the inner resistance can be lowered and cracks can be prevented and therefore, it is preferable.
In this configuration, if the tin dioxide layer of the negative substrate contains antimony and fluorine, the inner resistance can be more lowered and therefore, it is preferable.

The tin dioxide layer of the positive substrate may be formed on both faces of the positive substrate. When the above-mentioned configuration is made, the inner resistance can be more lowered and therefore, it is preferable.

The average thickness of the tin dioxide layer of the positive substrate may be 10 nm or thicker and 50 µm or thinner. When the above-mentioned configuration is made, the inner resistance can be lowered and cracks can be prevented.

The tin dioxide layer of the positive substrate may contain antimony and fluorine. If the above-mentioned configuration is made, the inner resistance can be more lowered and therefore, it is particularly preferable.

The lead-acid battery may include an active material retaining body made of lead or a lead alloy for retaining the positive active material or the negative active material. When this configuration is made, the active material strength is improved and handling is made easy at the time of battery production and therefore, it is preferable.

The positive substrate may be a positive electrode terminal and the negative substrate may be a negative electrode terminal. When the above-mentioned configuration is made, since the substrates are served as the terminals, there is no need to separately install terminals and the number of the parts can be reduced and the cost can be saved and therefore, it is preferable.

Further, another embodiment of the invention is a lead-acid battery having a positive electrode plate, a negative electrode plate, a bipolar electrode plate, an electrolyte solution, and a separator retaining the electrolyte solution, wherein the positive electrode plate includes a positive substrate and a positive active material on one face of the positive substrate and in the positive substrate, a tin dioxide layer is formed at least on the face having the positive active material of the positive substrate and the tin dioxide layer formed on the face having the positive active material has contact with the positive active material; the negative electrode plate is formed by layering a negative substrate, a carbon material-containing conductive resin film, and a negative active material in this order; the bipolar electrode plate is formed by layering a positive active material, a bipolar substrate bearing a tin dioxide layer on both faces, a carbon material-containing conductive resin film, and a negative active material in this order, the positive active material of a neighboring electrode plate with a separator interposed therebetween is layered on the negative active material of the bipolar electrode plate, and the negative active material of a neighboring electrode plate with a separator interposed therebetween is layered on the positive active material of the bipolar electrode plate; and the electrolyte solution has a specific gravity in a range of 1.250 to 1.500 at 20°C in a fully charged state.
In this embodiment, since the bipolar electrode plate obtained by forming the positive active material and the negative active material on both faces of a single substrate is used, the inner resistance can be more lowered and the battery is made lightweight and the space can be saved and therefore, it is preferable.

The above-mentioned embodiment may have the following configurations.
The bipolar substrate is made of titanium or a titanium-containing alloy and the tin dioxide layer formed on the face of the bipolar substrate on which the conductive resin film is layered may have a thickness of 10 nm or thicker and 50 µm or thinner and contain antimony.
When the above-mentioned configuration is made, since titanium contained in the bipolar substrate is excellent in resistance to sulfuric acid, the life performance of the battery can be improved and if a substrate made of titanium or a titanium-containing alloy is used, the capital-investment spending can be saved and therefore, it is preferable. Further, if the antimony-containing tin dioxide layer with the above-mentioned thickness is formed on the substrate surface, the inner resistance can be lowered and therefore, it is preferable.

A plurality of lead-acid batteries each having a battery container for holding one electrode plate selected from a positive electrode plate, a negative electrode plate, and a bipolar electrode plate, and the separator are layered and the battery container is provided with an insulating container main body surrounding the positive active material, the separator, and the negative active material and having a form opened in parts where a substrate including the positive active material and a substrate including the negative active material are arranged and the substrates may be served as parts of the battery container.
When the above-mentioned configuration is made, with respect to the lead-acid battery having the bipolar electrode plate, since the substrates can be served as parts of the battery container, the weight can be trimmed and the steam barrier property can be improved and increase of the inner resistance and decrease of the output performance along with dry out deterioration due to steam permeation can be suppressed and therefore, it is preferable.

The positive substrate may be made of titanium or a titanium-containing alloy. Since titanium is excellent in resistance to sulfuric acid, the life performance of the battery can be improved and if a substrate made of titanium or a titanium-containing alloy is used, the capital-investment spending can be saved and therefore, it is preferable.

One or more substrates selected from the above-mentioned positive substrate and the negative substrate may bear a tin dioxide layer on both faces thereof.
When the above-mentioned configuration is made, the inner resistance can be more lowered and therefore, it is preferable.

The average thickness of the tin dioxide layer of one or more substrates selected from the above-mentioned positive substrate and the negative substrate may be 10 nm or thicker and 50 µm or thinner.
When the above-mentioned configuration is made, the inner resistance can be more lowered and cracks can be prevented.

One or more tin dioxide layers selected from the tin dioxide layer of the positive substrate, the tin dioxide layer of the negative substrate, and the tin dioxide layer of the bipolar substrate may contain antimony and fluorine.
When the above-mentioned configuration is made, the inner resistance can be more lowered and therefore, it is more preferable.

The lead-acid battery may include an active material retaining body made of lead or a lead alloy for retaining the positive active material or the negative active material.
When the above-mentioned configuration is made, the active material strength is improved and handling is made easy at the time of battery production and therefore, it is preferable.

The positive substrate may be a positive electrode terminal and the negative substrate may be a negative electrode terminal. When the above-mentioned configuration is made, since the substrates are served as the terminals, there is no need to separately install terminals and the number of the parts can be reduced and the cost can be saved and therefore, it is preferable.

### (EFFECTS OF THE INVENTION)

According to the invention, a long life lead-acid battery can be provided.

### BRIEF DESCRIPTION OF DRAWINGS

[Fig. 1] A cross-sectional view of the lead-acid battery of Embodiment 1.
[Fig. 2] A cross-sectional view of an assembled battery by combining six lead-acid batteries of Embodiment 1.
[Fig. 3] A cross-sectional view of the lead-acid battery of Embodiment 3.
[Fig. 4] A cross-sectional view of the negative electrode plate of the lead-acid battery of Embodiment 3.
[Fig. 5] A cross-sectional view of the negative electrode plate of a lead-acid battery of Embodiment 4.
[Fig. 6] A cross-sectional view of the lead-acid battery of Embodiment 5.
[Fig. 7] A cross-sectional view of the bipolar electrode plate of the lead-acid battery of Embodiment 5.
[Fig. 8] A drawing showing the relation of the electrolyte solution specific gravity at 20°C in a fully charged state and the charge/discharge cycle life performance of a lead-acid battery using a positive current collector bearing a tin dioxide layer on the surface thereof for a positive electrode plate.
[Fig. 9] A drawing showing the relation of the electrolyte solution specific gravity at 20°C in a fully charged state and a lead-acid battery using a positive current collector bearing a tin dioxide layer on the surface thereof for a positive electrode plate and the relation of the electrolyte solution specific gravity at 20°C in a fully charged state and the charge/discharge cycle life performance of a conventional lead-acid battery.
[Fig. 10] A perspective view showing a resistance value measurement apparatus.
[Fig. 11] A cross-sectional view of a cell using the lead-acid battery of Embodiment 3.

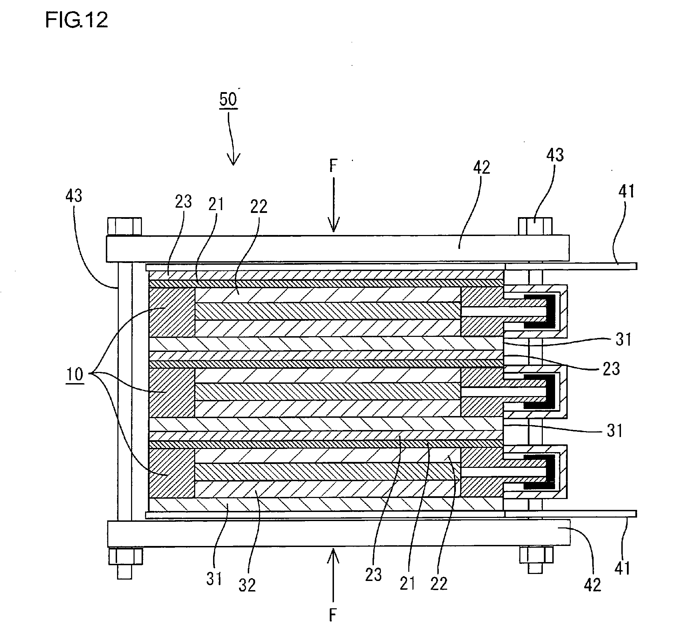

[Fig. 12] A cross-sectional view of an assembled battery using the lead-acid battery of Embodiment 3.
[Fig. 13] A front view of an active material retaining body.
[Fig. 14] A cross-sectional view of an active material retaining body.

### DESCRIPTION OF REFERENCE NUMERALS

10: Control valve type lead-acid battery of the invention
11: Discharge port serving as liquid injection port
12: Control valve
14: Battery container
14A: Container main body (frame body)
15: Separator
20A: Negative current collector
21: Conductive resin film
22: Negative active material
23: Negative substrate
31: Positive current collector
32: Positive active material
33: Positive substrate

### BEST MODE FOR CARRYING OUT THE INVENTION

### < Embodiment 1 >

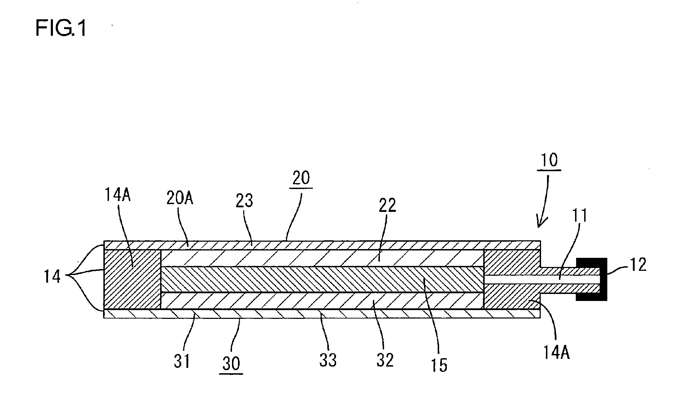

Hereinafter, a control valve type lead-acid battery 10 (hereinafter, simply referred to as "lead-acid battery 10") of Embodiment 1 of the invention will be described with reference to drawings. Fig. 1 shows a configuration example of a cell of a control valve type lead-acid battery 10 (nominal voltage: 2V, 20 hour rate-rated capacity: C = 2Ah) using a positive current collector 31 obtained by forming a conductive ceramic protection film on the surface of a positive substrate 33.

The lead-acid battery 10 of this embodiment, as shown in Fig. 1, includes a structure in which a frame body of an insulating container main body 14A is sandwiched between the positive substrate 33 and a negative substrate 23 and a positive active material 32, a separator 15, and a negative active material 22 are layered and arranged in this order in the frame of a container main body 14A. That is, in this embodiment, a battery container 14 surrounds the positive active material 32, the separator 15, and the negative active material 22 and is constituted with the frame body 14A (the container main body) forming a form (a frame) opened in the parts where the positive substrate 33 and the negative substrate 23 are arranged and also the positive substrate 33 and the negative substrate 23 arranged upper and lower in the frame body 14A.
A discharge port serving as liquid injection port 11 communicated with the outside is formed in the frame body 14, which is a container main body and a cap-form control valve 12 is attached to the discharge port serving as liquid injection port 11.

A positive electrode plate 30 of the lead-acid battery 10 of this embodiment includes the positive current collector 31 obtained by forming a conductive ceramic protection film made of tin dioxide (a tin dioxide layer) on the surface of the positive substrate 33 and the positive active material 32.
The positive active material 32 is a plate-form active material containing mainly lead dioxide and obtained by producing an active material paste, which can be obtained by a common production method of lead-acid battery, with kneading a lead powder, water, and diluted sulfuric acid and carrying out chemical conversion and charging and is arranged while being brought into contact with a face of the positive substrate 33 which is to be arranged in the negative substrate 23 side.
In this embodiment, the positive substrate 33 is made of titanium with a thickness of 0.1 mm and the tin dioxide layer is formed on the face having contact with the positive active material 32 of the positive substrate 33.

In the invention, the tin dioxide layer on the surface of the positive substrate 33 may be formed at least on the face of the positive substrate 33 including the positive active material 32; however if the tin dioxide layer is formed on both face of the positive substrate 33, the inner resistance can be more lowered and therefore, it is preferable.

The average thickness of the tin dioxide layer on the surface of the positive substrate 33 is preferably 10 nm or thicker and 50 µm or thinner in terms of lowering the inner resistance and prevention of cracks. It is because if the average thickness of the tin dioxide layer is thinner than 10 nm, the effect of lowering the inner resistance cannot be exerted sufficiently and if it exceeds 50 µm, cracks may be caused.
In addition, in terms of attainment of the life performance, the average thickness of the tin dioxide layer formed on the face including the positive active material 32 is preferably 50 nm or thicker.
Further, if the tin dioxide layer contains antimony and fluorine, the inner resistance can be lowered and therefore, it is preferable. Particularly, if both of antimony and fluorine are contained, the inner resistance can remarkably be lowered and therefore it is preferable. The content ratios of antimony and fluorine are preferably 1 to 10% by mass for antimony and 0.1 to 12% by mass for fluorine based on the entire weight of the tin dioxide layer.

A method for forming a tin dioxide layer on the surface of the positive substrate 33 will be described.
First, an organic tin compound is dissolved in an organic solvent and based on the necessity, prescribed amounts of a compound containing antimony element and a compound containing fluorine element are added to produce a raw material solution.
Next, a tin dioxide layer is formed by a method of dipping the positive substrate 33 in the raw material solution, applying the raw material solution to the substrate 33 by spin coating, spraying the raw material solution to the substrate 33 by spray or the like and thereafter carrying out thermally decomposition. These methods for forming a layer are generally called coating-thermal decomposition methods. Besides the coating-thermal decomposition method, a tin dioxide layer may also be formed by a method of sputtering a raw material target (a target obtained by firing a tin dioxide powder mixed with a compound containing antimony element and a compound containing fluorine element based on the necessity in a thin plate form and sticking the fired product to a packing plate made of copper) to the substrate 33.
Examples of the organic tin compound in the raw material solution include such as dibutyltin diacetate and tributoxytin, and in terms of production efficiency, dibutyltin diacetate is preferable. Examples of the compound containing antimony element include triphenylantimony and antimony trichloride and triphenylantimony is preferably used. Examples of the compound containing fluorine preferably include ammonium fluoride.
Examples of the organic solvent for dissolving the organic tin compound include such as ethanol and butanol, and in terms of ease availability, ethanol is preferable.

Since the positive substrate 33 to be used in this embodiment is made of titanium having a high melting point, if the tin dioxide layer with a desired thickness is formed by the coating-thermal decomposition method, the capital-investment spending can be suppressed low and therefore it is preferable. In addition, if the material for the substrate is a low melting point material such as lead or aluminum, a method of sputtering a raw material target is preferable.
In addition, if the tin dioxide layer is formed by a method involving dipping the substrate 33, the tin dioxide layer can be formed on both faces of the substrate 33 in one step and thus the substrate 33 bearing the tin dioxide layer on both faces can easily be obtained and therefore it is preferable.

A negative electrode plate 20 of the lead-acid battery 10 of this embodiment include a negative current collector 20A plating of lead with a thickness of 20 to 30 µm on the face to be arranged in the positive substrate 33 side of the negative substrate 23 with a thickness of 0.1 mm and made of copper and the negative active material 22.
The negative active material 22 is a plate-form active material containing mainly a sponge-form metal lead and obtained by producing an active material paste, which can be obtained by a common production method of a lead-acid battery, with kneading a lead powder, water, diluted sulfuric acid, carbon, barium sulfate, and lignin and carrying out chemical conversion and charging and is arranged while being brought into contact with a lead-plated face of the negative current collector 20A.

The separator 15 is interposed between the positive active material 32 and the negative active material 22. The positive active material 32, the separator 15, and the negative active material 22 are impregnated with the electrolyte solution containing diluted sulfuric acid as a main component.

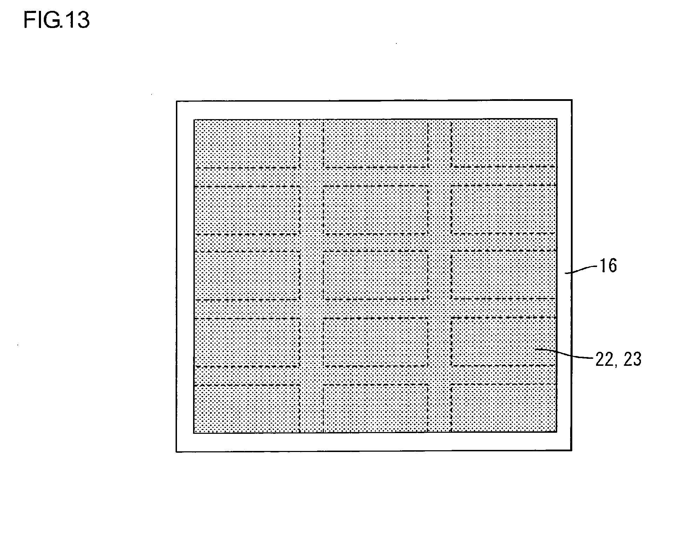

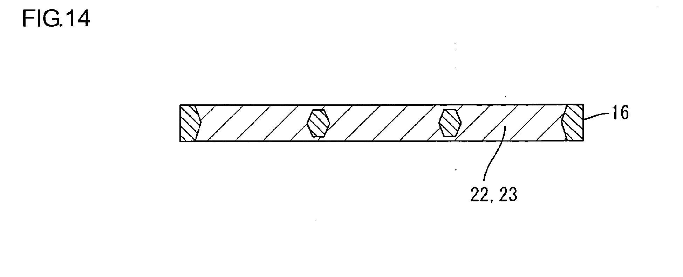

In the invention, in terms of improvement of the strength, it is preferable to provide an active material retaining body 16 made of lead or a lead alloy for retaining an active material (see Fig. 13 and Fig. 14). Examples of the active material retaining body 16 include those having a lattice-form shape as shown in Fig. 13, and if the active material retaining bodies are installed for the positive active material 32 and the negative active material 22 respectively, it is particularly preferable.

In addition, in the invention, as the electrolyte solution, those having a specific gravity in a range of 1.250 to 1.500 at 20°C in a fully charged state are used. It is because if the specific gravity of the electrolyte solution is adjusted in the above-mentioned range, temporal considerable decrease of the potential in the vicinity of the positive current collector 31 at the time of high rate discharge can be prevented and dissolution of the tin dioxide layer on the surface of the positive substrate 33 and deterioration of the positive substrate 33 can be prevented and the life can be prolonged.
If the specific gravity of the electrolyte solution is lower than 1.250, since the potential in the vicinity of the positive current collector 31 is temporarily considerably decreased at the time of high rate discharge, dissolution of the tin dioxide layer on the surface of the positive substrate 33 and deterioration of the positive substrate 33 are caused to result in a short life and if the specific gravity exceeds 1.500, it may be at risk of generating hydrogen sulfide.

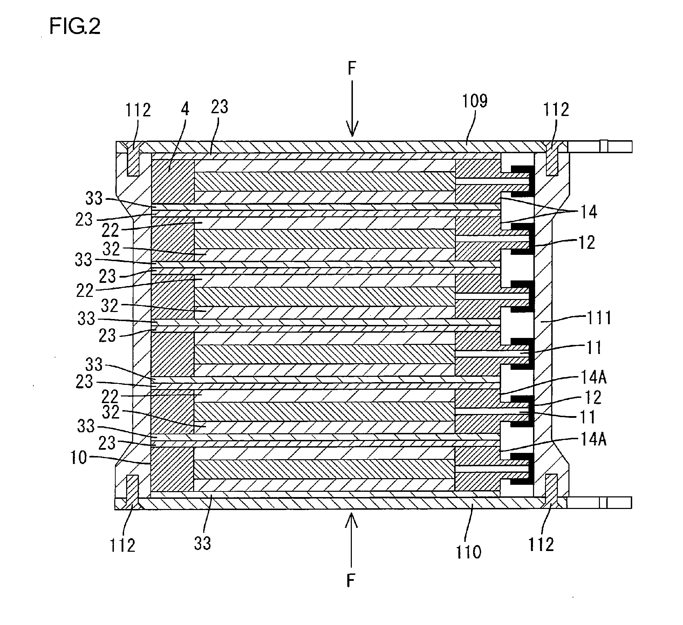

Two or more of the lead-acid batteries 10 of this embodiment may be used for producing an assembled battery. Fig. 2 shows a configuration example of an assembled battery of controlled valve type lead-acid batteries in the case of combining 6 lead-acid batteries 10 (cells) shown in Fig. 1. The cells 10 constituting the assembled battery are layered in a manner that the positive substrate 33 of a lead-acid battery is put on the negative substrate 23 of a neighboring lead-acid battery to be in serial connection. Further, these six cells 10 are provided with pressing members 109 and 110 made of conductive materials such as metal plates in the upper and lower side and surrounded with an auxiliary frame 111 made of an insulating material such as a resin in the circumference.

Further, the pressing members 109 and 110 are fixed on the upper and lower end faces of the auxiliary frame 111 respectively with a plurality of screws 112, so that these six cells 101 are pressed strongly in the direction shown with the arrow F and firmly sandwiched and fixed.

In addition, in each cell 1 pressed as described above by the pressing members 109 and 110 and firmly sandwiched and fixed, the separator 15 is put in a compressed state and due to the repulsive force, the positive active material 32 is pushed to the positive current collector 31 by a constant pressure (100 to 400 kPa by gauge pressure) and the negative active material 22 is pushed to the negative current collector 20A. Further, the porosity of the separator 15 in the compressed state by outside pressing means is about 50 to 70%.

Next, the effect of this embodiment will be described.
According to this embodiment, since an electrolyte solution having a specific gravity in a range of 1.250 to 1.500 at 20°C in a fully charged state is used as the electrolyte solution, considerable temporal decrease of the potential in the vicinity of the positive current collector can be prevented at the time of high rate discharge and dissolution of the tin dioxide layer on the surface of the positive substrate 33 and deterioration of the positive substrate 33 can be prevented and thus it is made possible to provide a lead-acid battery with a long life.

Further, since titanium, which is a high melting point material, is used for the positive substrate 33 employed in this embodiment, the tin dioxide layer can be formed by a method, for example, a coating-thermal decomposition method, by which the capital-investment spending can be suppressed low. Furthermore, since titanium used as the material of the substrate 33 is excellent in resistance to sulfuric acid, the life performance of the lead-acid battery 10 can be more improved.

Further, according to this embodiment, since the positive substrate 33 and the negative substrate 23 are served as parts of the battery container 14, the weight can be trimmed and steam barrier property can be improved and increase of the inner resistance and decrease of the output performance along with dry out deterioration due to steam permeation can be suppressed.

Further, according to this embodiment, the negative active material 22 is brought into contact with the negative substrate 23. Since the negative substrate 23 made of copper is plated with lead, the corrosion resistance of the current collector 20A can be improved. As a result, the life performance of the lead-acid battery 10 can be more improved.

### < Embodiment 2 >

A control valve type lead-acid battery 10 (hereinafter, sometimes simply referred to as "lead-acid battery 10") of Embodiment 2 of the invention will be described. For the parts in common with those of Embodiment 1, the same symbols are assigned and duplicate descriptions are omitted.
The lead-acid battery 10 of this embodiment has the same structure as that of the lead-acid battery 10 of Embodiment 1 shown in Fig. 1; however it is different from the lead-acid battery 10 of Embodiment 1 in that a substrate 23 made of a conductive resin is used as a negative substrate 23.

Examples of a conductive agent to be used for the conductive resin include metal carbides such as tantalum carbide and titanium carbide; metal oxides such as titanium oxide and ruthenium oxide; metal nitrides such as chromium nitride and aluminum nitride; metal fibers such as iron fibers and copper fibers; metal powders such as titanium powders and nickel powders; and carbon materials to be used for products of the invention. Herein, examples of the carbon material of the carbon material-containing conductive resin film 21 to be used in the invention include graphite powders such as natural graphite, thermal decomposition graphite and kish graphite; expanded graphite obtained by immersing the above-mentioned graphite in an acidic solution and thereafter expanding by heating, ketjen black, acetylene black, and carbon black; PAN type carbon fibers, pitch type carbon fibers, carbon nanofibers, carbon nanotubes, and the like.
Among the above-mentioned carbon materials, in terms of excellence in acid resistance and conductivity, materials selected from the group consisting of graphite powder, carbon black, carbon nanofibers, and carbon nanotubes are preferable.

Examples of the material of the substrate 23 made of the conductive resin include polyolefin (PO) resins or polyolefin elastomers such as ethylene-containing homopolymers or copolymers; amorphous polyolefin reins (APO) such as cyclic polyolefins; polystyrene esins such as polystyrene (PS), ABS and SBS, or hydrogenated styrene elastomers such as SEBS; acrylic resins such as poly(vinyl chloride) (PVC) resins, poly(vinylidene chloride) (PVDC) resins, poly(methyl methacrylate) (PMMA), and acrylic copolymers; polyester resins such as poly(ethylene terephthalate) (PET); polyamide (PA) resins such as nylon 6, nylon 12, and nylon copolymers; polyimide (PI) resins; polyether imide (PEI) resins; polysulfone (PS) resins; polyether sulfone (PES) resins; polyamide imide (PAI) resins; polyether ether ketone (PEEK) resins; polycarbonate (PC) resins; polyvinyl butyral (PVB) resins; polyarylate (PAR) resins; fluoro resins or elastomers such as polyvinylidene fluoride-tetrafluoroethylene-hexafluoropropylene copolymers (THV), tetrafluoroethylene-hexafluoropropylene copolymers (FEP), polyvinylidene fluoride (PVDF), and polyvinyl fluoride (PVF); and (meth)acrylate resins.
Among these resins, polyolefin (PO) resins or polyolefin elastomers excellent in heat resistance and corrosion resistance are preferable.

From a viewpoint that the inner resistance is more decreased, the average thickness of the substrate 23 made of the conductive resin is preferably 80 µm or thicker and 1 mm or thinner. It is because if the average thickness of the substrate 23 is thinner than 80 µm, the steam barrier property becomes insufficient and the inner resistance change becomes significant and if the thickness exceeds 1 mm, the conductivity is worsened.
According to this embodiment, since the substrate made of a conductive resin is used, the lead-acid battery can be made lightweight.

### <Embodiment 3>

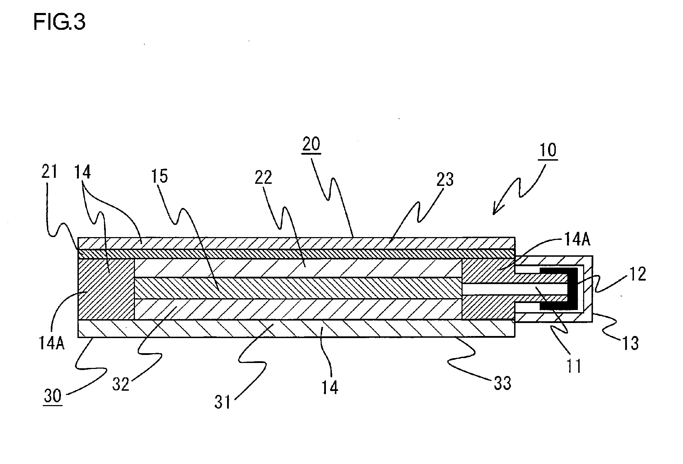

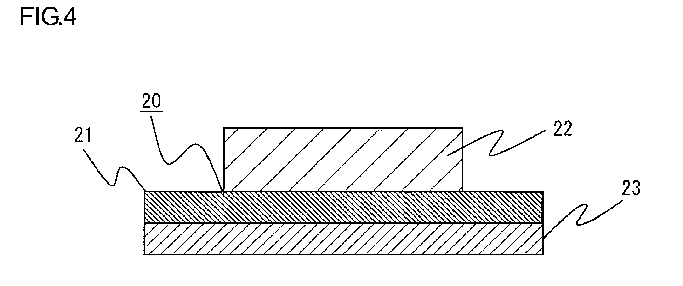

A control valve type lead-acid battery 10 (hereinafter, sometimes simply referred to as "lead-acid battery 10") of Embodiment 3 of the invention will be described with reference to Fig. 3 and Fig. 4. For the parts in common with those of Embodiment 1, the same symbols are assigned and duplicate descriptions are omitted.
The lead-acid battery 10 of this embodiment is different from the lead-acid battery 10 of Embodiment 1 in the configuration of a negative electrode plate 20.
The lead-acid battery 10 of this embodiment includes, as shown in Fig. 3, a battery container 14 constituted with a frame body 14A configuring side faces and two substrates 23 and 33 configuring the upper and lower wall faces. A discharge port serving as liquid injection port 11 communicated with the outside is formed in the frame body 14A and a cap-form control valve 12 is attached to the aperture part of the discharge port serving as liquid injection port 11. Further, a valve presser 13 is attached to the control vale 12 so as to prevent the valve from coming off.

In the lead-acid battery 10 of this embodiment, the negative electrode plate 20 and a positive electrode plate 30 are arranged upper and lower while sandwiching a glass mat separator 15 absorbing and retaining an electrolyte solution containing diluted sulfuric acid as a main component and the negative substrate 23 and the positive substrate 33 are arranged so as to seal the upper and lower open parts of the frame body 14A and served as parts of the battery container 14.

The positive electrode plate 30 is configured in a manner of having a positive current collector 31 made of a tin dioxide film (a tin dioxide layer) on a face in one side (upper side face in Fig. 3) of the positive substrate 33 made of titanium and a positive active material 32 containing mainly lead dioxide in the upper side of the tin dioxide film.

The negative electrode plate 20 of the lead-acid battery 10 of this embodiment is configured, as shown in Fig. 4, in a manner that the negative substrate 23, a carbon material-containing conductive resin film 21, and the negative active material 22 containing mainly sponge-form lead are layered in this order.

In addition, the carbon material-containing conductive resin film 21 and the negative substrate 23 are partially bonded to an extent that the conductive property is not inhibited and thus the handling property for the assembling process or the like is improved.

Examples of a conductive agent to be used for the conductive resin include metal carbides such as tantalum carbide and titanium carbide; metal oxides such as titanium oxide and ruthenium oxide; metal nitrides such as chromium nitride and aluminum nitride; metal fibers such as iron fibers and copper fibers; metal powders such as titanium powders and nickel powders; and carbon materials to be used for products of the invention. Herein, examples of the carbon material of the carbon material-containing conductive resin film 21 to be used in the invention include graphite powders of such as natural graphite, thermal decomposition graphite and kish graphite; expanded graphite obtained by immersing the above-mentioned graphite in an acidic solution and thereafter expanding by heating, ketjen black, acetylene black, and carbon black; PAN type carbon fibers, pitch type carbon fibers, carbon nanofibers, carbon nanotubes, and the like.
Among the above-mentioned carbon materials, in terms of excellence in acid resistance and conductivity, materials selected from the group consisting of graphite powder, carbon black, carbon nanofibers, and carbon nanotubes are preferable.

Examples of the material of the carbon material-containing conductive resin film 21 include polyolefin (PO) resins or polyolefin elastomers such as ethylene-containing homopolymers or copolymers; amorphous polyolefin reins (APO) such as cyclic polyolefins; polystyrene type resins such as polystyrene (PS), ABS and SBS, or hydrogenated styrene elastomers such as SEBS; acrylic resins such as poly(vinyl chloride) (PVC) resins, poly(vinylidene chloride) (PVDC) resins, poly(methyl methacrylate) (PMMA), and acrylic copolymers; polyester resins such as poly(ethylene terephthalate) (PET); polyamide (PA) resins such as nylon 6, nylon 12, and nylon copolymers; polyimide (PI) resins; polyether imide (PEI) resins; polysulfone (PS) resins; polyether sulfone (PES) resins; polyamide imide (PAI) resins; polyether ether ketone (PEEK) resins; polycarbonate (PC) resins; polyvinyl butyral (PVB) resins; polyarylate (PAR) resins; fluoro resins or elastomers such as vinylidene fluoride-tetrafluoroethylene-hexafluoropropylene copolymers (THV), tetrafluoroethylene-hexafluoropropylene copolymers (FEP), polyvinylidene fluoride (PVDF), and polyvinyl fluoride (PVF); and (meth)acrylate resins.

Among these resins, polyolefin (PO) resins or polyolefin elastomers excellent in heat resistance and corrosion resistance are preferable.

In the invention, as a material for the negative substrate 23, in terms of low contact resistance with the carbon material-containing conductive resin film 21 and low cost, any one of copper, lead, tin, and zinc, or an alloy containing two or more kinds of these metals is preferable.

According to the embodiment, since the negative substrate 23, the carbon material-containing conductive resin film 21, and the negative active material 22 are layered in this order and the substrate 23 is kept from direct contact with the negative active material 22 and the electrolyte solution, corrosion and dissolution of the negative substrate 23 are prevented and the life performance can be more improved and weight increase due to lead plating or cost up due to plating process can be avoided.
Further, since the negative substrate 23 and the positive substrate 33 are served as parts of the battery container 14, the weight can be trimmed and the steam barrier property is improved and increase of the inner resistance and decrease of the output performance along with dry out deterioration due to steam permeation can be suppressed.

Further, since the negative substrate 23 is made of any one of copper, lead, tin, and zinc, or an alloy containing two or more kinds of these metals, the contact resistance with the carbon material-containing conductive resin film 21 can be lowered and accordingly it is made possible to obtain a lead-acid battery 10 having low inner resistance and excellent in output performance.

### <Embodiment 4>

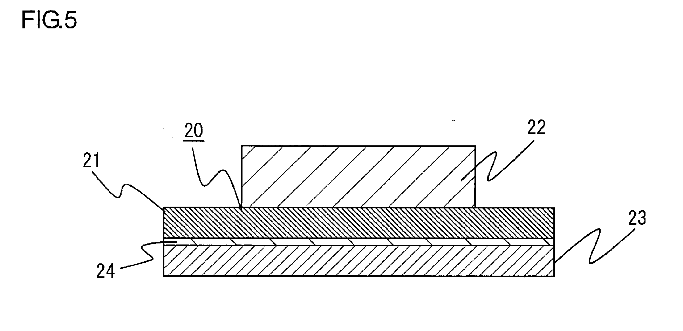

A lead-acid battery 10 of Embodiment 4 of the invention will be described with reference to Fig. 5. For the parts in common with those of Embodiment 3, the same symbols are assigned and duplicate descriptions are omitted.
The battery of this embodiment is different from that of Embodiment 3 in that the battery includes a negative substrate 23 made of titanium or a titanium alloy and an antimony-containing tin dioxide layer 24 is formed between the surface of the negative substrate 23 and a carbon material-containing conductive resin film 21 (see Fig. 5).

The antimony-containing tin dioxide layer 24 may be formed such that the carbon material-containing conductive resin film 21 and the titanium (alloy) substrate 23 are kept from direct contact with each other and the average thickness of the layer is preferably 10 nm or thicker and 50 µm or thinner in terms of lowering of the inner resistance and prevention of cracks. It is because if the average thickness of the tin dioxide layer 24 is thinner than 10 nm, the effect of lowering the inner resistance cannot be exerted sufficiently and if it exceeds 50 µm, cracks may be caused.
If fluorine is added in addition to antimony to the tin dioxide layer 24, the inner resistance can be lowered and it is particularly preferable. The content ratios of antimony and fluorine are preferably 1 to 10% by mass for antimony and 0.1 to 12% by mass for fluorine based on the weight of tin element of the tin dioxide layer.

In this embodiment, the tin dioxide layer 24 of the negative substrate 23 may be formed on the carbon material-containing conductive resin film 21 side of the surface of the negative substrate 23; however if the layer is formed on both faces of the negative substrate 23, the inner resistance can be more lowered and therefore, it is preferable.
In a case where the tin dioxide layer 24 is formed on both faces of the negative substrate 23, the average thickness of the tin dioxide layer formed opposite to the conductive resin film 21 is preferably 10 nm or thicker and 50 µm or thinner in terms of lowering of the inner resistance and prevention of cracks.
Further, also with respect to the tin dioxide layer formed opposite to the conductive resin film 21, if antimony and fluorine are contained, the inner resistance can be lowered and thus it is preferable. Particularly, both antimony and fluorine are contained, the inner resistance can be lowered remarkably and thus it is preferable.

A method of forming the antimony-containing tin dioxide layer 24 on the negative substrate 23 in this embodiment will be described.
First, an organic tin compound is dissolved in an organic solvent and a prescribed amount of a compound containing antimony element is added to produce a raw material solution. In addition, in a case where a fluorine-containing tin dioxide layer is formed, a compound containing fluorine element is added at the time of producing the raw material solution.
Next, the tin dioxide layer 24 is formed by a coating-thermal decomposition method on the negative substrate 23. Besides the coating-thermal decomposition method, the tin dioxide layer may be formed by a sputtering method.

Since the negative substrate 23 to be used in this embodiment is made of titanium having a high melting point, if a tin dioxide layer with a desired thickness is formed by the coating-thermal decomposition method, the capital-investment spending can be suppressed low and therefore, it is preferable.

In addition, if the tin dioxide layer 24 is formed by a method involving dipping the substrate 23, the tin dioxide layer 24 can be formed on both faces of the substrate 23 in one step and thus the negative substrate 23 bearing the tin dioxide layer 24 on both faces can easily be obtained and therefore it is preferable.

Examples of the organic tin compound in the raw material solution include such as dibutyltin diacetate and tributoxytin, and in terms of production efficiency, dibutyltin diacetate is preferable. Examples of the compound containing antimony element include triphenylantimony and antimony trichloride, and triphenylantimony is preferably used. Examples of the compound containing fluorine preferably include ammonium fluoride.
Examples of the organic solvent for dissolving the organic tin compound include such as ethanol and butanol, and in terms of ease availability, ethanol is preferable.

The content of tin dioxide is preferably 1 to 5% by mass based on the entire raw material solution and it is preferable to contain antimony in an amount such that the content of antimony element is set to be 1 to 10% by mass based on the tin element in the raw material solution, in terms of the conductive property. Further, in consideration of the loss during layer formation, it is preferable to contain a fluorine compound in an amount such that the content of fluorine element is set to be 2 to 60% by mass based on the tin element in the raw material solution, in terms of the conductive property.

Next, the effect of this embodiment will be described.
If copper, lead, tin, zinc and the like are used as a material for the negative substrate 23, it is preferable in terms of low contact resistance with the carbon material-containing conductive resin film 21 and cost reduction. However, for example, in a case where the negative substrate 23 is used for a battery employed for application and place where penetration with acid rain and salt water is highly possible, since copper, lead, tin, and zinc are different kinds of metals from the positive substrate 33 material (titanium alloy), there is a concern of a risk of galvanic corrosion.

However, according to this embodiment, since titanium or a titanium alloy, the same metal as the material of the positive substrate 33, is used as a material of the negative substrate 23, there occurs no problem of galvanic corrosion even in the case of application where penetration with acid rain and salt water is possible.

Incidentally, in a case where titanium or a titanium alloy (hereinafter, also referred to as "titanium (alloy)") is used as a material of the negative substrate 23, the contact resistance with the conductive resin film 21 is increased more than that in the case of using another substrate material; however, according to this embodiment, since the antimony-containing tin dioxide layer 24 is formed between the substrate 23 and the conductive resin film 21, low resistance can be made (see Table 6 below).

It is for the following reason that the resistance of the battery can be lowered by forming the antimony-containing tin dioxide layer 24 between the substrate 23 and the carbon material-containing conductive resin film 21.

In the negative electrode including the titanium (alloy) substrate 23 and the carbon material-containing conductive resin film 21 covering the substrate 23, the electron orbit (n orbit) of a carbon filler on the surface of the conductive resin 21 and the electron orbit (d orbit) of the titanium oxide layer on the surface of the titanium (alloy) substrate 23 respectively have high anisotropy and thus generate an energy barrier, and supposedly the resistance of the battery tends to be high.

However, if the antimony-containing tin dioxide layer 24 is formed, a layer of the electron orbit (s orbit) with low anisotropy is inserted intermediately and no energy barrier is formed and thus it is supposed that the resistance of the battery can be lowered.

### <Embodiment 5 >

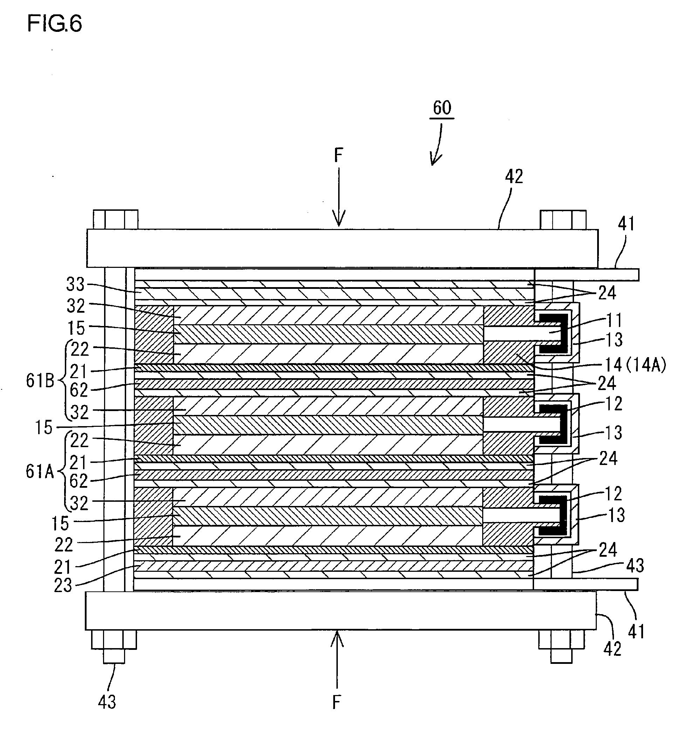

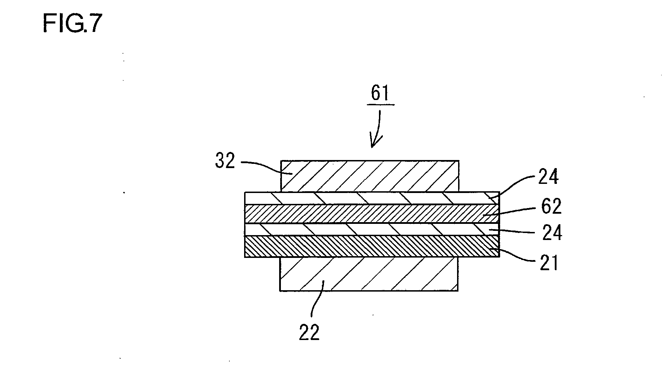

A lead-acid battery 60 of Embodiment 5 of the invention will be described with reference to Fig. 6 and Fig. 7. For the parts in common with those of Embodiments 1 to 4, same symbols are assigned and duplicate descriptions are omitted.
The lead-acid battery 60 of this embodiment is different from the lead-acid battery 10 of Embodiment 1 in that it includes a bipolar electrode plate 61.
In this embodiment, in a state of being layered in the upper and lower direction, three battery containers 14 are sandwiched between conductive pressing members 41 served as a terminal and retained in pressed state in the direction shown as the arrow F and fixed by using bolts and nuts 43 made of metals.

Each of the three battery containers 14 is constituted with a frame body 14A for holding a positive active material 32, a separator 15 and a negative active material 22 and two substrates installed in the upper and lower open parts of the frame body 14A.
A bipolar substrate 62 is installed between the frame body 14A in the most upper side and the frame body 14A in the second upper side and this bipolar substrate 62 seals both of the open part in the lower side of the frame body 14A installed in the most upper side and the open part in the upper side of the frame body installed in the second upper side.
Another bipolar substrate 62 different from the former is installed between the frame body 14A in the second upper side and the frame body in the third upper side and this bipolar substrate 62 seals both of the open part in the lower side of the frame body 14A installed in the second upper side and the open part in the upper side of the frame body 14A installed in the third upper side.

In this embodiment, the bipolar electrode plate 61 is obtained by, as shown in Fig. 7, layering the positive active material 32, a bipolar substrate 62 bearing a tin dioxide layer 24 on both faces, a carbon material-containing conductive resin film 21, and the negative active material 22 in this order.
In the lead-acid battery 60 of this embodiment, the negative substrate 23 is arranged while being brought into contact with the lower side pressing member 41 and the conductive film 21 and the negative active material 22 are layered on the negative substrate 23.
Further, on the negative active material 22 of the negative substrate 23, the positive active material 32 of a neighboring bipolar electrode plate 61A is layered with the separator 15 interposed therebetween.
On the negative active material 22 of the bipolar electrode plate 61A, the positive active material 32 of a neighboring bipolar electrode plate 61B is layered with the separator 15 interposed therebetween and on the negative active material 22 of the bipolar electrode plate 61B, the positive active material 32 formed on the positive substrate 33 of a neighboring positive electrode plate 30 is layered with the separator 15 interposed therebetween.

As materials of the bipolar substrate 62 of this embodiment, those made of titanium or a titanium-containing alloy are preferable. It is because titanium is excellent in resistance to sulfuric acid and capable of further improving the life performance of a battery and, if a substrate made of titanium or a titanium alloy is used, a tin dioxide layer can be formed by a coating-thermal decomposition method and therefore, the capital-investment spending can be saved.

The tin dioxide layer 24 is formed on both faces of the bipolar substrate 62, both faces of the positive substrate 33, and both faces of the negative substrate 23 in this embodiment. The tin dioxide layer can be formed by the above-mentioned method.
The average thickness of the tin dioxide layer 24 of these substrates 23, 33, and 62 is preferably 10 nm or thicker and 50 µm or thinner in terms of lowering the inner resistance and prevention of cracks. It is because if the average thickness of the tin dioxide layer 24 is thinner than 10 nm, the effect of lowering the inner resistance cannot be exerted sufficiently and if it exceeds 50 µm, cracks may be caused. In addition, in terms of reliable attainment of the life performance, the average thickness of the tin dioxide layer formed on the face including the positive active material 32 is preferably 50 nm or thicker.
Further, if antimony and fluorine are contained in the tin dioxide layer 24, the inner resistance can be lowered and therefore, it is preferable. Particularly, if both of antimony and fluorine are contained, the inner resistance can remarkably be lowered and therefore it is preferable. The content ratios of antimony and fluorine are preferably 1 to 10% by mass for antimony and 0.1 to 12% by mass for fluorine based on the weight of the tin element in the tin dioxide layer.
In addition, in a case where a bipolar substrate 62 made of titanium and a negative substrate 23 made of titanium are used, in terms of decrease of the contact resistance, it is preferable to form a tin dioxide layer 24 containing at least antimony on the face on which the carbon material-containing conductive resin film 21 is layered of the substrates 52 and 23.

Further, in the lead-acid battery 60 of this embodiment, similarly to the battery shown in Embodiment 1, in terms of improvement of the strength, it is preferable to provide an active material retaining body 16 made of lead or a lead alloy (see Fig. 13 and Fig. 14 for retaining the active materials 22 and 32). Examples of the active material retaining body 16 include such as those having a lattice-form form as shown in Fig. 13 and it is particularly preferable that the active material retaining bodies are formed respectively for the positive active material 32 and the negative active material 22.

According to this embodiment, since the bipolar electrode plates 61A and 61B each made by forming the positive active material 32 and the negative active material 22 on both faces of a single substrate, the battery can be made further lightweight and the installation space can be saved.
According to this embodiment, since the tin dioxide layer 24 is formed on both faces of the positive substrate 33, the negative substrate 23, and the bipolar substrate 62, the inner resistance can be lowered.

According to this embodiment, since the substrates 33, 23, and 62 are served as parts of the battery containers 14 and one bipolar substrate 62 is served as parts of the battery containers 14 arranged upper and lower, the weight can be trimmed and steam barrier property can be improved and increase of the inner resistance and decrease of the output performance along with dry out deterioration due to steam permeation can be suppressed.

### <Examples>

### 1. Investigation of specific gravity of electrolyte solution

The inventors of the invention produced lead-acid batteries having electrolyte solutions with various specific gravities and investigated the batteries by the following methods.

Assembled batteries (nominal voltage: 2V, 20 hour rate-rated capacity: C = 2Ah) produced by combining each 6 lead-acid batteries 10 of Embodiment 1 containing electrolyte solutions with specific gravities of 1.200, 1.250, 1.300, 1.350, 1.400, 1.450, and 1.500 at 20°C in a fully charged state by outer pressing means were made as assembled batteries T1, T2, T3, T4, T5, T6, and T7, respectively. The pressing degree of these assembled batteries was 400 kPa by gauge pressure. Copper plates with a thickness of 0.8 mm was used as pressing members, as the outer pressing means and insulating auxiliary pressing members were installed in the outside thereof to pinch and press 6 cells and fix the cells using bolts and nuts made of metals.

If the electrolyte solution having a specific gravity higher than 1.500 at 20°C in a fully charge state is used, hydrogen sulfide may possibly be generated from the negative electrode at the time of supercharging and therefore the upper limit of the specific gravity of the electrolyte solution is set at 1.500 in the invention.

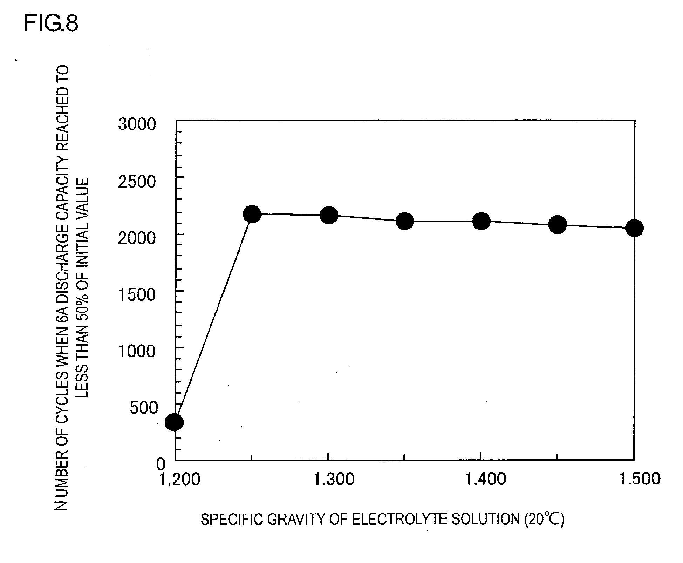

A charge/discharge cycle life test was carried out for the assembled batteries T1 to T7 by the following method and the results are shown in Table 1 and Fig. 8.

### (Charge/discharge cycle life test)

The assembled batteries T1 to T7 were respectively subjected to the charge/discharge cycle life test of discharging at an electric current of 6A (3CA) at room temperature (25°C) until the terminal voltage became 6.0 V and charging in condition of 0.5 A/14.7 V × 4 h and the time point when the discharge duration period became less than 50% of the initial value was determined to be terminated the life. The numbers of the cycles at the time point when the life was terminated were shown in Table 1 and Fig. 8.

**[Table 1]**

| Battery No. | Specific gravity of electrolyte solution (20°C) | Number of cycles | Remark |
|---|---|---|---|
| T1 | 1.200 | 342 | Comparative Example |
| T2 | 1.250 | 2176 | Example |
| T3 | 1.300 | 2165 | Example |
| T4 | 1.350 | 2068 | Example |
| T5 | 1.400 | 1993 | Example |
| T6 | 1.450 | 1889 | Example |
| T7 | 1.500 | 1814 | Example |

The assembled battery T1 containing a electrolyte solution with a specific gravity of 1.200 at 20°C in a fully charged state was terminated in about 400 cycles in the charge/discharge cycle life test. It was found out by disassembly investigation the termination cause of the battery T1 was due to deterioration of the positive electrode plate caused by dissolution of the tin dioxide layer formed on the substrate surface made of titanium.
The cause of the deterioration of the assembled battery T1 was considered as follows. In the fully charged assembled battery T1, it is supposed that the sulfate ion in the fine pores of the positive active material was used in priority at the time of high rate discharge and water is produced as a discharge reaction product and therefore, the potential in the vicinity of the positive current collector was considerably decreased and tin dioxide formed on the substrate surface of titanium was reduced at the potential to be dissolved in the form of an Sn²⁺ ion and thus the positive electrode plate was deteriorated by repeating high rate discharge to shorten the life.

The assembled batteries T2, T3, T4, T5, T6, and T7 of the invention containing the electrolyte solutions with specific gravities in a range of 1.250 to 1.500 at 20°C in a fully charged state were terminated due to the softening of the positive active material in about 2000 cycles in the charge/discharge cycle life test.
In the fully charged assembled batteries T2, T3, T4, T5, T6, and T7, the positive active material was softened by repeating the charge and discharge; however it is supposed that the effect of retaining the positive current collector and the positive active material by high pressure pressing (100 to 400 kPa by gauge pressure) was more significant than the effect of the softening of the positive active material on the discharge performance and therefore these assembled batteries were excellent in charge/discharge cycle life performance.

With respect to conventional lead-acid batteries using a lead or a lead alloy for current collectors, electrolyte solutions with various specific gravities were used and investigated to find out that not only the effect of the corrosion of the positive current collector but also the effect of the softening of the positive active material was caused in a region where the specific gravity is higher than 1.300 at 20°C in a fully charged state and therefore, the cycle life performance was considerably worsened.

In addition, with respect to the lead-acid batteries of the invention, even when the specific gravities at 20°C in a fully charged state were respectively set and the amount of the electrolyte solution was changed to increase or decrease the amount of the sulfate ion in the batteries, since the sulfate ion in the fine pores of the active material was used in priority at the time of high rate discharge of 3CA to 5CA (C: 20 hour rate-rated capacity), similarly to the above-mentioned test result, a result that the charge/discharge cycle life performance depends on the specific gravity of the electrolyte solution was obtained.

In order to compare the property of a lead-acid battery using a lead alloy for a current collector having a conventional structure with the above-mentioned test results of the assembled batteries T1 to T7, the charge/discharge cycle life test was carried out.

Valve control type lead-acid batteries (nominal voltage: 12 V, 20 hour rate-rates capacity: C = 2 Ah) using Pb-Ca-Sn alloys for the positive current collector and the negative current collector and containing electrolyte solutions having specific gravities of 1.200, 1.250, 1.300, 1.400, and 1.450 at 20°C in a fully charged state were made as batteries R1, R2, R3, R4, and R5.
The pressing degree of these batteries was 20 kPa.

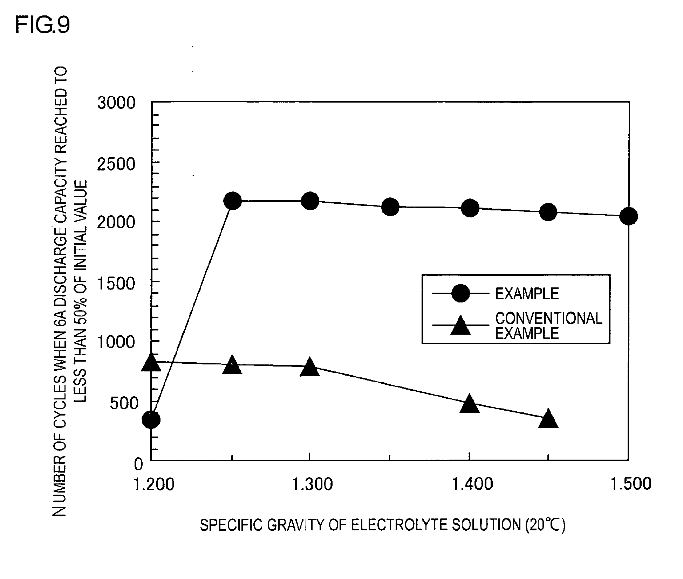

Table 2 and Fig. 9 show, together with the results of the assembled batteries T1 to T7, the results for the batteries R1 to R5 obtained by carrying out the charge/discharge cycle life test by the same method as that for the assembled batteries T1 to T7.

**[Table 2]**

| Battery No. | Specific gravity of electrolyte solution (20°C) | Number of cycles | Remark |
|---|---|---|---|
| T1 | 1.200 | 342 | Comparative Example |
| T2 | 1.250 | 2176 | Example |
| T3 | 1.300 | 2165 | Example |
| T4 | 1.350 | 2118 | Example |
| T5 | 1.400 | 2105 | Example |
| T6 | 1.450 | 2076 | Example |
| T7 | 1.500 | 2042 | Example |
| R1 | 1.200 | 834 | Conventional Example |
| R2 | 1.250 | 796 | Conventional Example |
| R3 | 1.300 | 786 | Conventional Example |
| R4 | 1.400 | 478 | Conventional Example |
| R5 | 1.450 | 350 | Conventional Example |

The batteries R1, R2, and R3 containing the electrolyte solutions having specific gravities in a range of 1.200 to 1.300 were terminated in about 800 cycles and according to disassembly investigation, the termination cause was corrosion of the positive current collector.
The batteries R4 and R5 containing the electrolyte solutions having specific gravities higher than 1.300 were terminated in about 300 to 500 cycles and the termination cause was softening of the positive active material.

That is, among the control valve type lead-acid batteries using the Pd-Ca-Sn alloys for the positive current collector and the negative current collector, the batteries containing the electrolyte solutions having specific gravities in a range of 1.200 to 1.300 were terminated due to corrosion of the positive current collector and the batteries containing the electrolyte solutions having specific gravities higher than 1.300 were terminated due to softening of the positive active material.

### 2. Investigation of substrate material and conductive resin film

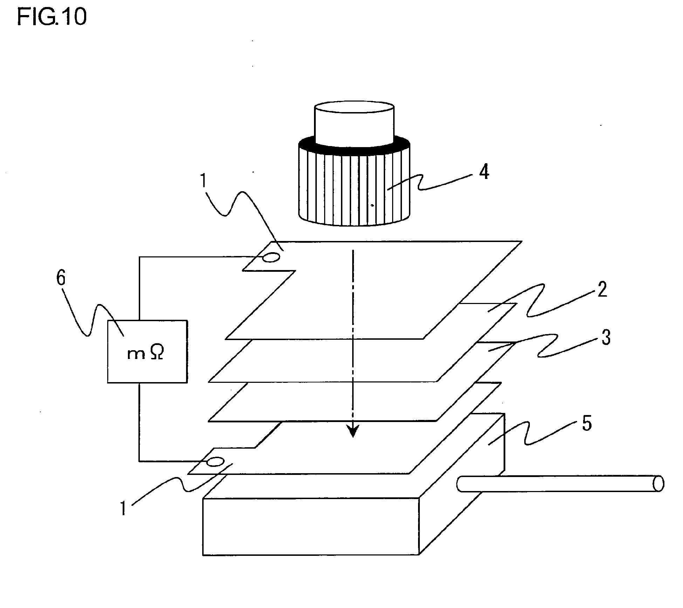

The inventors of the invention investigated to obtain batteries with low inner resistance and excellent output performance, focusing on materials of the negative substrate and materials of the conductive resin films.
(1) Measurement of resistance values of substrate material and conductive resin film
The contact resistances of substrates produced from various materials and various kinds of conductive resin films were measured using an apparatus shown in Fig. 10.

In Fig. 10, 1 denotes a copper terminal for measurement, and the size of the measurement face was length 5 cm × width 5 cm; 2 denotes a carbon material-containing conductive resin film; and 3 denotes substrates of various kind materials. Further, 4 denotes a cylinder of a hydraulic press; 5 denotes a load cell; and 6 denotes a milli-ohmic resistance meter.

A carbon black-containing conductive resin film made of polypropylene and having a thickness of 200 µm was used as the carbon material-containing conductive resin film: a conductive resin film made of polypropylene and using conductive titanium powders as a conductive material was used as conventional conductive resin film A: an elastic conductive film (trade name: KZ-45, manufactured by Kinugawa Rubber Industrial Co., Ltd.) was used as conventional conductive resin film B: and an elastic conductive film (trade name: KGCL-10GP, manufactured by Kinugawa Rubber Industrial Co., Ltd.) was used as conventional conductive resin film C.
Concretely, the respective samples shown in Table 3 were sandwiched between the copper terminals 1 for measurement and the resistance values were measured by the milli-ohmic resistance meter 6 in a state where press was applied so as to give a load of 150 kgf to the load cell 5 and the results are shown in Table 4.

**[Table 3]**

| Sample | Resistance value (mΩ) |
|---|---|
| Carbon material-containing conductive resin film | 7.4 |
| Copper plate | 0.2 |
| Lead plate | 2.5 |
| Lead-tin alloy plate | 2.8 |
| Zinc plate | 0.7 |
| Zinc-copper alloy plate | 0.7 |
| Tin plate | 1.4 |
| Aluminum plate | 0.3 |
| Stainless steel plate | 9.2 |
| Titanium plate | 5.1 |
| Carbon material-containing conductive resin film + copper plate | 10.4 |
| Carbon material-containing conductive resin film + lead plate | 14.8 |
| Carbon material-containing conductive resin film + lead-tin alloy plate | 14.2 |
| Carbon material-containing conductive resin film + zinc plate | 11.1 |
| Carbon material-containing conductive resin film + zinc-copper alloy plate | 11.4 |
| Carbon material-containing conductive resin film + tin plate | 12.8 |
| Carbon material-containing conductive resin film + aluminum plate | 102.3 |
| Carbon material-containing conductive resin film + stainless steel plate | 480.7 |
| Carbon material-containing conductive resin film + titanium plate | 216.2 |
| Conventional conductive resin film A | 22.8 |
| Conventional conductive resin film B | 56.3 |
| Conventional conductive resin film C | 69.8 |

As being understood from the results in Table 3, the resistance values of only the substrate materials became higher in the order of copper, aluminum, zinc, zinc-copper alloy, tin, lead, lead-tin alloy, titanium, and stainless steel.

In the case of combinations of a carbon material-containing conductive resin film 21 and substrate materials, the resistance values became as low as 15 mΩ or lower for copper, lead, lead-tin alloy, zinc, zinc-copper alloy, and tin; however the resistance values exceeded 100 mΩ for aluminum, stainless steel, and titanium.
Further, the resistance value of the carbon material-containing conductive resin film 21 was about 1/3 to 1/10 as compared with those of the conventional conductive resins A to C and low.

In the lead-acid batteries 10 of the invention, a positive electrode plate 20 obtained by layering the carbon material-containing conductive resin film 21 on a negative substrate 23 was used.
Accordingly, based on the above-mentioned measurement results, the difference values calculated by subtracting the resistance values of the substrates of various kinds of materials themselves and the resistance value of the carbon material-containing conductive resin film itself from the resistance values measured after layering the carbon material-containing conductive resin film and the substrates of various kinds of materials were defined as contact resistance values and shown in Table 4.

**[Table 4]**

| Sample | Contract resistance value (mΩ) |
|---|---|
| Carbon material-containing conductive resin film + copper plate | 2.8 |
| Carbon material-containing conductive resin film + lead plate | 4.9 |
| Carbon material-containing conductive resin film + lead-tin alloy plate | 4.0 |
| Carbon material-containing conductive resin film + zinc plate | 3.0 |
| Carbon material-containing conductive resin film + zinc-copper alloy plate | 3.3 |
| Carbon material-containing conductive resin film + tin plate | 4.0 |
| Carbon material-containing conductive resin film + aluminum plate | 94.6 |
| Carbon material-containing conductive resin film + stainless steel plate | 464.1 |
| Carbon material-containing conductive resin film + titanium plate | 203.7 |

As being made clear in Table 4, it was found that the carbon material-containing conductive resin film had low contact resistance with metals or alloy plates of copper, lead, tin, and zinc but had high contact resistance with metals forming dense oxide coating layers on the surfaces of, such as titanium, stainless steel, and aluminum.

### (2) Measurement of contact resistance with positive electrode plate

Since a positive substrate made of titanium or a titanium alloy is often used in a lead-acid battery designed to have a long life, in a case where the lead-acid batteries 10 of the invention are used in the form of an assembled battery, if the contact resistance is high between a negative electrode terminal as which a negative electrode plate 20 is served and a positive electrode terminal, an object contact body, as which a neighboring positive electrode plate 30 is served, it results in a problem that the resistance of the assembled battery becomes high. The face in one side of the surface of the positive electrode terminal is covered with a titanium oxide coating film by heating in a calcining step for forming the tin dioxide layer.

Therefore, the contact resistance between various kinds of substrates and a titanium plate on which an oxide coating film was formed intentionally on a heat source was measured by the following method. In addition, the same film used in the above description (1) was used as the carbon material-containing conductive resin film.

Using a titanium plate heated at 500°C in atmospheric air for 15 minutes on a heat source, the various kinds of substrates described in Table 5 or the carbon material-containing conductive resin film was layered on the face of the titanium plate which was arranged in the heat source side and the resistance was measured in the same manner as (1) and the results are shown in Table 5. For comparison, the measurement was also carried out for the case of sandwiching the heated titanium plate only.

**[Table 5]**

| Sample | Resistance value (mΩ) |
|---|---|
| Heated titanium plate | 12.2 |
| Heated titanium plate + carbon material-containing conductive resin film | 13400.0 |
| Heated titanium plate + copper plate | 14.4 |
| Heated titanium plate + lead plate | 17.7 |
| Heated titanium plate + lead-tin alloy plate | 17.6 |
| Heated titanium plate + zinc plate | 14.7 |
| Heated titanium plate + zinc-copper alloy plate | 15.7 |
| Heated titanium plate + tin plate | 16.0 |
| Heated titanium plate + aluminum plate | 17.6 |
| Heated titanium plate + stainless steel plate | 24.9 |
| Heated titanium plate + titanium plate | 19.7 |

As being made clear in Table 5, although the contact resistance between the heated titanium plate and the carbon material-containing conductive resin film was considerably high, the contact resistance with other substrates made of various kinds of materials was small.

It is supposed that even if the titanium oxide coating film formed on the positive electrode plate was heated, it was extremely thin and the conductive property was obtained by the tunnel effect. However, only the carbon material-containing conductive resin film had considerably high contract resistance with this titanium oxide coating film. Probably, it is supposed that since the electron orbit (π orbit) of carbon material is different from the electron orbit (d orbit) of the titanium oxide layer and has high anisotropy, an energy barrier is generated.
In addition, Table 5 shows the results in the case of using substrates made of several kinds of alloys and the same results were obtained even in the case of alloys with other metals if the main components were the same.

(3) Measurement of resistance values in the case of forming antimony-containing tin dioxide layer 24 in negative electrode plate 20 of Embodiment 4
As shown in the above-mentioned Table 5, the contact resistance of the carbon material-containing conductive resin film and the heated titanium plate was considerably high. From this result, in a case where only the carbon material-containing conductive resin film 21 is used for the current collector of the negative electrode plate 20, it is expected that the contact resistance with a neighboring positive electrode plate becomes considerably high.

Accordingly, if a substrate made of nay one of copper, lead, tin and zinc or an alloy containing two or more kinds of these metals is used for the negative substrate 23, the inner resistance in an assembled battery can be lowered without being affected by the energy barrier. However, in the case of use conditions in which the galvanic corrosion may possibly be caused due to contact between different kinds of metals, a substrate made of the same titanium (alloy) is preferable.
In the case of using a substrate 23 made of titanium (alloy) for the negative substrate 23, a method for decreasing the contact resistance with the conductive resin film 21 was intensely investigated and it was found that if an antimony-containing tin dioxide layer 24 was formed between the surface of the negative substrate 23 and the carbon material-containing conductive resin film 21, a remarkable effect of decreasing the contact resistance could be caused.
The content of antimony and the thickness of the antimony-containing tin dioxide layer 24 for exhibiting the effect of decreasing the contact resistance were investigated by the following methods.

Triphenylantimony in amounts to give the antimony contents of 1% by mass, 5% by mass, and 10% by mass based on the tin element in raw material solutions was dissolved in a solution obtained by dissolving dibutyltin diacetate in ethanol in an amount to give the amount of 2.5% by mass of tin dioxide based on the raw material solutions to prepare the raw material solutions.

Each of the raw material solutions was intermittently sprayed so as to form a prescribed thickness on a substrate made of titanium heated to around 450°C while keeping the temperature without decreasing too much and thermally decreased on the titanium substrate to form an antimony-containing tin dioxide layer 24.

The carbon material-containing conductive resin film 21 was layered on the face of the antimony-containing tin dioxide layer 24 side of the substrate 23 made of titanium on which the antimony-containing tin dioxide layer 24 was thus formed and the contact resistance was measured by the same method as that in (1) and the results are shown in Table 6.

**[Table 6]**

| Antimony content | Film thickness (nm) | Resistance (mΩ) |
|---|---|---|
| 1% by mass | 5 | 468.5 |
| | 10 | 16.1 |
| | 20 | 17.3 |
| | 40 | 19.7 |
| | 100 | 20.9 |
| 5% by mass | 5 | 354.8 |
| | 10 | 15.2 |
| | 20 | 16.1 |
| | 40 | 17.9 |
| | 100 | 18.8 |
| 10% by mass | 5 | 392.0 |
| | 10 | 15.5 |
| | 20 | 16.3 |
| | 40 | 18.7 |
| | 100 | 19.8 |

As shown in Table 6, if the thickness of the tin dioxide layer 24 was 10 nm or thicker, the resistance value was considerably lowered. In the comparison of different antimony contents with the same film thickness, the resistance value was lowest in a case where the antimony content was 5% by mass.
Accordingly, a case where the content of antimony is 5% by mass based on the tin element in the raw material solution is supposed to be more proper.

### (4) Conclusion

The following was found as a result of investigations on the substrate materials and conductive resin films.
i) Since the carbon material-containing conductive resin film has smaller resistance by itself than the conventional conductive resin film, the resistance can be lowered if the film is used to produce a cell.
   However, in the case of obtaining electric conjunction by directly pressing the carbon material-containing conductive resin film as the negative electrode plate served as a terminal to a neighboring positive electrode plate made of a titanium (alloy) (in the case of obtaining an assembled battery), the inner resistance becomes considerably high.
   Accordingly, in a case where the lead-acid batteries 10 of the invention are used as an assembled battery, the carbon material-containing conductive resin film 21 may be layered on one face of the negative substrate 23 made of a metal plate of copper, lead, tin, or zinc, or of an alloy containing two or more kinds of these metals which has small contact resistance with the carbon material-containing conductive resin film and the face of the substrate where the conductive resin film 21 is not layered may be arranged in the positive electrode plate 30 side.

ii) Further, in the case of using a substrate made of titanium with a high contact resistance with the carbon material-containing conductive resin film 21 as the positive substrate 23, the antimony-containing tin dioxide layer 24 with a thickness of 10 nm or thicker may be formed between the substrate 23 and the conductive resin film 24.

### 3. Production of battery

### (1) Production of positive electrode plate 30

### (1-1) Production of positive electrode plate 30 including positive substrate bearing tin dioxide layer on one face thereof

An organic tin solution was intermittently sprayed to a positive substrate 33 with length 10 cm × width 10 cm × thickness 100 µm and made of titanium on a heated heat source to form a tin dioxide layer with high crystallinity on one surface and thus to obtain a positive current collector 31. A positive active material 32 with length 7 cm × width 7 cm × thickness 1.6 mm and mainly containing lead dioxide was arranged in a tin dioxide layer 24 side of the positive substrate 33 to produce a positive electrode plate 30. In addition, the tin dioxide layer 24 was formed by a method described below.

Triphenylantimony in an amount to give the antimony content of 5% by mass based on the tin element in a raw material solution was dissolved in a solution obtained by dissolving dibutyltin diacetate in ethanol in an amount to give the amount of 2.5% by mass of tin dioxide based on the raw material solution to prepare the raw material solution.
This raw material solution was intermittently sprayed so as to form a prescribed thickness on the negative substrate 33 made of titanium heated to around 450°C while keeping the temperature without decreasing too much and thermally decreased on the titanium substrate 33 to form an antimony-containing tin dioxide layer 24 with an average thickness of 100 nm.

### (1-2) Production of positive electrode plate 30 including positive substrate 33 bearing tin dioxide layer on both faces thereof

A tin dioxide layer 24 with an average thickness of 20 nm was formed on the face, on which no tin dioxide layer 24 was formed, of the positive substrate 33 produced in (1-1) in the same manner as in (1-1) to obtain a positive current collector 31. A positive active material 32 with length 7 cm × width 7 cm × thickness 1.6 mm and mainly containing lead dioxide was arranged in the side of the tin dioxide layer 24 with the average thickness of 100 nm formed on both faces of the positive substrate 33 to produce the positive electrode plate 30.

### (1-3) Production of positive electrode plate 30 including positive substrate 33 bearing tin dioxide layer 24 containing antimony and fluorine on both faces thereof

Triphenylantimony in an amount to give the antimony content of 5% by mass based on the tin element in a raw material solution was dissolved in a solution obtained by dissolving dibutyltin diacetate in an amount to give the amount of 2.5% by mass of tin dioxide based on the raw material solution and ammonium fluoride in an amount to give the fluorine content of 50% by mass based on the tin element in a raw material solution was dissolved in water and mixed with the raw material solution.
Using this raw material solution, a tin dioxide layer 24 with an average thickness of 100 nm and containing antimony and fluorine was formed on one face of a positive substrate 33 made in the same method as in (1-1).
A tin dioxide layer 24 with an average thickness of 20 nm and containing antimony and fluorine was also formed on the other face of the positive substrate 33 to give a positive current collector 31. A positive active material 32 with length 7 cm × width 7 cm × thickness 1.6 mm and mainly containing lead dioxide was arranged in the side of the tin dioxide layer 24 with the average thickness of 100 nm formed on both faces of the positive substrate 33 to produce the positive electrode plate 30.

### (2) Production of negative electrode plate 20

### (2-1) Production of negative electrode plate 20 shown in Embodiment 3

Using a negative substrate 23 with length 10 cm × width 10 cm × thickness 100 µm and made of copper, a conductive resin film 21 (film thickness: 200 µm) with the same size as that of the substrate 23 and made of carbon black (carbon material)-containing polypropylene was layered on the negative substrate 23.
A carbon material-containing conductive resin film 21 and the substrate 23 were partially stuck to an extent that the conductive property was not inhibited. A negative active material 22 with length 7 cm × width 7 cm × thickness 1.3 mm and mainly containing sponge-form lead was arranged in the conductive resin film 21 side of the negative substrate 23 to produce a negative electrode plate 20 as shown in Fig. 4.

### (2-2) Production of negative electrode plate 20 shown in Embodiment 4

A negative electrode plate 20 shown in Fig. 5 was produced in the same manner as in (2-1), except that a negative substrate 23 made of titanium was used in place of the negative substrate 23 made of copper of (2-1) and an antimony-containing tin dioxide layer 24 was formed on a face in one side of the substrate 23 and a carbon material-containing conductive resin film 21 was layered to cover the tin dioxide layer 24. The tin dioxide layer 24 was formed by the following method.

Triphenylantimony in an amount to give the antimony content of 5% by mass based on the tin element in a raw material solution was dissolved in a solution obtained by dissolving dibutyltin diacetate in ethanol in an amount to give the amount of 2.5% by mass of tin dioxide based on the raw material solution to prepare the raw material solution.
This raw material solution was intermittently sprayed so as to form a prescribed thickness on the negative substrate 23 made of titanium heated to around 450°C while keeping the temperature without decreasing too much and thermally decreased on the titanium substrate 23 to form an antimony-containing tin dioxide layer 24 with an average thickness of 20 nm.

### (2-3) Production of negative electrode plate 20 including negative substrate 23 bearing tin dioxide layer 24 on both faces thereof

A negative electrode plate 20 was produced in the same manner as in (2-2), except that the negative substrate 23 produced in (2-2) on which a tin dioxide layer 24 with an average thickness of 20 nm was formed in the same manner as in (2-2) in the side where no tin dioxide layer was formed was used.

### (2-3) Production of negative electrode plate 20 including negative substrate 23 bearing tin dioxide layer 24 containing antimony and fluorine on both faces thereof

Triphenylantimony in an amount to give the antimony content of 5% by mass based on the tin element in a raw material solution was dissolved in a solution obtained by dissolving dibutyltin diacetate in ethanol in an amount to give the amount of 2.5% by mass of tin dioxide based on the raw material solution and ammonium fluoride in an amount to give the fluorine content of 50% by mass based on the tin element in a raw material solution was dissolved in water and mixed with the raw material solution.
A negative electrode plate 20 was produced in the same manner as in (2-2), except that a negative substrate 23 on which tin dioxide layers 24 each having an average thickness of 20 nm and containing antimony and fluorine were formed on both faces by using this raw material solution was used.

### (2-5) Production of negative electrode plate of Comparative product 1

A negative electrode plate of Comparative product 1 was produced in the same manner as in the negative electrode plate 20 of (2-1), except that a copper plate subjected to lead plating with a film thickness of 50 µm on both faces was used in place of the negative substrate 23 of (2-1) and a carbon material-containing conductive resin film 21.

### (2-6) Production of negative electrode plate of Comparative product 2

A negative electrode plate of Comparative product 2 was produced in the same manner as in (2-1), except that only a conventional conductive resin film "an elastic conductive film (trade name: KZ-45, manufactured by Kinugawa Rubber Industrial Co., Ltd.), film thickness 200 µm" was used in place of the negative substrate 23 of (2-1) and a carbon material-containing conductive resin film 21.

### (2-7) Production of negative electrode plate 20 of Embodiment 2

A negative electrode plate 20 of Embodiment 2 was produced in the same manner as in (2-1), except that only a carbon black-containing conductive resin film 21 (film thickness 200 µm) made of polypropylene was used in place of the negative substrate 23 of (2-1) and a carbon material-containing conductive resin film 21.

### (3) Production of control valve type lead-acid battery 10

A lead-acid battery 10 was produced by the following method using a glass mat separator 15 absorbing and retaining an electrolyte solution containing diluted sulfuric acid as a main component.
As the electrolyte solution, an electrolyte solution having a specific gravity of 1.350 at 20°C in a fully charged state was used.
First, the positive electrode plate 30 produced in (1) and each negative electrode plate 20 produced in (2) were put in a battery container 14 in a state where a positive active material 32 and a negative active material 22 were set face to face while the glass mat separator 15 was sandwiched between them and thereafter, the upper and lower open parts of the battery container 14 were respectively sealed.

The combinations of positive electrode plates 30 and negative electrode plates 20 of controlled valve type lead-acid batteries 10 of respective Examples 1 to 7 and Comparative Examples 1 and 2 were as following.
A controlled valve type lead-acid battery 10 using the positive electrode plate 30 of (1-1) and the negative electrode plate 20 of (2-1) was made as Example 1 and a controlled valve type lead-acid battery 10 using the positive electrode plate 30 of (1-1) and the negative electrode plate 20 of (2-2) was made as Example 2. A controlled valve type lead-acid battery 10 using the positive electrode plate 30 of (1-2) and the negative electrode plate 20 of (2-3) was made as Example 3 and a controlled valve type lead-acid battery 10 using the positive electrode plate 30 of (1-3) and the negative electrode plate 20 of (2-4) was made as Example 4. The controlled valve type lead-acid batteries 10 in which the positive electrode plate 30 of (1-1) and the negative electrode plate 20 of one of (2-5) and (2-6) were made to the controlled valve type lead-acid batteries of Comparative Example 1 and Comparative Example 2, respectively.
Further, a controlled valve type lead-acid battery 10 using the positive electrode plate 30 of (1-1) and the negative electrode plate 20 of (2-7) was made as Example 5: a controlled valve type lead-acid battery 10 using the positive electrode plate 30 of (1-2) and the negative electrode plate 20 of (2-7) was made as Example 6: and a controlled valve type lead-acid battery 10 using the positive electrode plate 30 of (1-3) and the negative electrode plate 20 of (2-7) was made as Example 7.

### (4) Production of cell

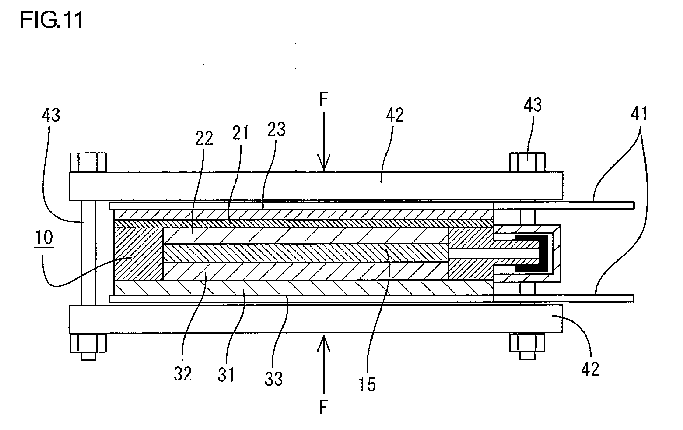

Each one of controlled valve type lead-acid batteries 10 produced in (3) of Examples 1 to 7 and Comparative Examples 1 and 2 was pinched with conductive pressing members 41 as shown in Fig. 11 and retained in pressed state in the direction shown as the arrow F to produce a cell.
A copper plate or a stainless steel plate with a thickness of 0.8 mm was used as the pressing members 41 and insulating pressing auxiliary members 42 were arranged in the outer side to pinch each controlled valve type lead-acid battery 10 to apply pressure and fixed with bolts and nuts 43 made of metals.
With respect to the cells of Examples 1 to 7 and Comparative Examples 1 and 2, the resistance between the pressing members 41 was measured according to the method of 2. (1) and the results are shown in Table 7.

**[Table 7]**

| Pressing member | Cell | Resistance value (mΩ) |
|---|---|---|
| Copper | Controlled valve type lead-acid battery of Comparative Example 1 | 20.4 |
| Copper | Controlled valve type lead-acid battery of Comparative Example 2 | 61.2 |
| Copper | Controlled valve type lead-acid battery of Example 1 (Product within the scope of the invention) | 20.2 |
| Copper | Controlled valve type lead-acid battery of Example 2 (Product within the scope of the invention) | 20.6 |
| Copper | Controlled valve type lead-acid battery of Example 3 (Product within the scope of the invention) | 14.8 |
| Copper | Controlled valve type lead-acid battery of Example 4 (Product within the scope of the invention) | 10.8 |
| Copper | Controlled valve type lead-acid battery of Example 5 (Product within the scope of the invention) | 19.7 |
| Copper | Controlled valve type lead-acid battery of Example 6 (Product within the scope of the invention) | 14.2 |
| Copper | Controlled valve type lead-acid battery of Example 7 (Product within the scope of the invention) | 10.4 |
| Stainless steel | Controlled valve type lead-acid battery of Comparative Example 1 | 23.1 |
| Stainless steel | Controlled valve type lead-acid battery of Comparative Example 2 | 63.4 |
| Stainless steel | Controlled valve type lead-acid battery of Example 1 (Product within the scope of the invention) | 22.8 |
| Stainless steel | Controlled valve type lead-acid battery of Example 2 (Product within the scope of the invention) | 23.3 |
| Stainless steel | Controlled valve type lead-acid battery of Example 3 (Product within the scope of the invention) | 16.2 |
| Stainless steel | Controlled valve type lead-acid battery of Example 4 (Product within the scope of the invention) | 11.5 |
| Stainless steel | Controlled valve type lead-acid battery of Example 5 (Product within the scope of the invention) | 204.8 |
| Stainless steel | Controlled valve type lead-acid battery of Example 6 (Product within the scope of the invention) | 196.3 |
| Stainless steel | Controlled valve type lead-acid battery of Example 7 (Product within the scope of the invention) | 201.1 |

As being made clear from Table 7, in a case where the pressing members 41 were copper plates, the inner resistance of the controlled valve type lead-acid battery of Comparative Example 2 using a conventional conductive resin film was high and the inner resistances of the controlled valve type lead-acid battery of Comparative Example 1 using a lead plated-copper plate and the controlled valve type lead-acid battery of Example 5 using a carbon material-containing conductive resin film 21 were similarly low.

On the other hand, in a case where the pressing members 41 were stainless steel plates, the resistance of each of the controlled valve type lead-acid batteries of Examples 5 to 7 became high. That is, these controlled valve type lead-acid batteries could not efficiently exhibit the storage battery performance in some cases in accordance with the object contact body. It is apparent from the results described above that the reason for that is the contact resistance of the carbon material-containing conductive resin film 21 and the pressing members 41. However, in the controlled valve type lead-acid batteries of Examples 5 to 7, since the negative electrode plates could be made lightweight, the batteries are advantageous in that the weights of the batteries became lightweight as compared with those of the batteries of other Examples and the material costs could be saved (details will be described later).

### (5) Production of assembled battery

Using controlled valve type lead-acid batteries 10 produced in (3) of Examples 1 to 7 and Comparative Examples 1 and 2, three of the same kinds of controlled valve type lead-acid batteries 10 were layered in a manner of forming series connection and using the same pressing members 41 and pressing auxiliary members 42 as those used for the cells of (4), the batteries were pinched from the upper and lower directions, and retained while being pressed in the direction of the arrow F to produce the assembled batteries. As the pressing members 41, copper plates were used.
With respect to the assembled batteries in the pressed state, the resistance between the pressing members 41 was measured according to the method of 2. (1) and the results were shown in Table 8.

**[Table 8]**

| Pressing member | Assembled battery | Resistance value (mΩ) |
|---|---|---|
| Copper | Controlled valve type lead-acid battery of Comparative Example 1 × 3 in series | 62.0 |
| Copper | Controlled valve type lead-acid battery of Comparative Example 2 × 3 in series | 158.4 |
| Copper | Controlled valve type lead-acid battery of Example 1 × 3 in series (Product within the scope of the invention) | 61.4 |
| Copper | Controlled valve type lead-acid battery of Example 2 × 3 in series (Product within the scope of the invention) | 62.6 |
| Copper | Controlled valve type lead-acid battery of Example 3 × 3 in series (Product within the scope of the invention) | 50.0 |
| Copper | Controlled valve type lead-acid battery of Example 4 × 3 in series (Product within the scope of the invention) | 36.0 |
| Copper | Controlled valve type lead-acid battery of Example 5 × 3 in series (Product within the scope of the invention) | 40204.3 |
| Copper | Controlled valve type lead-acid battery of Example 6 × 3 in series (Product within the scope of the invention) | 48.2 |
| Copper | Controlled valve type lead-acid battery of Example 7 × 3 in series (Product within the scope of the invention) | 34.5 |

As being made clear from Table 8, with respect to the assembled battery obtained by layering the controlled valve type lead-acid batteries of Example 5, the inner resistance was significantly increased; however the inner resistances of the assembled batteries obtained by layering the controlled valve type lead-acid batteries 10 of Examples 1 to 4 and Examples 6 and 7 were lower than the inner resistance of the assembled battery using controlled valve type lead-acid batteries of Comparative Example 2.
The inner resistances of the assembled batteries obtained by layering the controlled valve type lead-acid batteries 10 of Example 1 and Example 2 were low similarly to that of the inner resistance of the assembled battery obtained by layering controlled valve type lead-acid batteries of Comparative Example 1.
The inner resistances of the assembled batteries obtained by layering the controlled valve type lead-acid batteries 10 of Example 3, Example 4, Example 6, and Example 7 were further lower than those of the assembled battery obtained by layering controlled valve type lead-acid batteries of Example 1 and Example 2.
From these results, it was found that the inner resistances of lead-acid batteries including substrates 23 and 33 bearing the tin dioxide layers on both faces were lower than the inner resistances of lead-acid batteries including substrates 23 and 33 bearing the tin dioxide layers on one face. It is supposed that this is because tin or antimony or fluorine functions as a dopant in the titanium dioxide layer with high resistance on the surface of a substrate made of titanium and therefore the carrier density in the titanium dioxide layer is heightened.
The inner resistances of the assembled batteries obtained by layering the controlled valve type lead-acid batteries 10 of Example 4 and Example 7 were furthermore lower than those of the assembled battery obtained by layering controlled valve type lead-acid batteries of Example 3 and Example 6.
From these results, it was found that the inner resistances of lead-acid batteries including substrates 23 and 33 bearing the tin dioxide layers containing both antimony and fluorine were lower than the inner resistances of lead-acid batteries including substrates 23 and 33 bearing the tin dioxide layers containing only antimony. It is supposed that this is because tin in the tin dioxide layer was replaced with antimony to heighten the carrier density and oxygen was replaced with fluorine to further heighten the carrier density in the titanium dioxide layer.

Further, with respect to the above-mentioned assembled batteries, rated output discharge at 40 W was carried out for the respective batteries and the results are shown in Table 9.

**[Table 9]**

| Assembled battery | 14 W-discharge retention time (min-sec) |
|---|---|
| Controlled valve type lead-acid battery of Comparative Example 1 × 3 in series | 12 - 24 |
| Controlled valve type lead-acid battery of Comparative Example 2 × 3 in series | 4 - 23 |
| Controlled valve type lead-acid battery of Example 1 × 3 in series | 12 - 27 |
| Controlled valve type lead-acid battery of Example 2 × 3 in series | 12 - 22 |
| Controlled valve type lead-acid battery of Example 3 × 3 in series | 13 - 03 |
| Controlled valve type lead-acid battery of Example 4 × 3 in series | 14 - 10 |
| Controlled valve type lead-acid battery of Example 5 × 3 in series | 0 - 1 |
| Controlled valve type lead-acid battery of Example 6 × 3 in series | 13 - 12 |
| Controlled valve type lead-acid battery of Example 7 × 3 in series | 14 - 23 |

As being made clear from Table 9, it was found that the assembled batteries obtained by layering the controlled valve type lead-acid batteries of Example 1 and Example 2 obtained high output performance similar to that of the assembled battery including the storage batteries of Comparative Example 1.
It was found that the assembled batteries produced by using the controlled valve type lead-acid batteries of Example 3, Example 4, Example 6, and Example 7 were more excellent in output performance than that of the assembled batteries produced by using the controlled valve type lead-acid batteries of Example 1 and Example 2.

Next, the weights and the production costs of the lead-acid batteries 10 of Examples 1 to 7 were shown in Table 10 based on of percentage in a case where the weight and the production cost of the lead-acid battery 10 of Comparative Example 1 were respectively set to be 100%.

**[Table 10]**

| Cell | Weight ratio | Cost ratio |
|---|---|---|
| Controlled valve type lead-acid battery of Comparative Example 1 | 100% | 100% |
| Controlled valve type lead-acid battery of Example 1 (Product within the scope of the invention) | 70% | 73% |
| Controlled valve type lead-acid battery of Example 2 (Product within the scope of the invention) | 70% | 83% |
| Controlled valve type lead-acid battery of Example 3 (Product within the scope of the invention) | 70% | 87% |
| Controlled valve type lead-acid battery of Example 4 (Product within the scope of the invention) | 70% | 89% |
| Controlled valve type lead-acid battery of Example 5 (Product within the scope of the invention) | 66.5% | 69% |
| Controlled valve type lead-acid battery of Example 6 (Product within the scope of the invention) | 66.5% | 71% |
| Controlled valve type lead-acid battery of Example 7 (Product within the scope of the invention) | 66.5% | 72% |

As being made clear from Table 10, it was found that the lead-acid batteries of Examples 1 to 7 were lightweight and had low production costs (economical). Although the production cost of Example 2 was slightly higher than that of Example 1, there is no need to concern about the risk of galvanic corrosion in a case where it is used in seashores or outdoors. Further, the production costs of Example 3 and Example 4 were also slightly higher than that of Example 1; however, similarly, they are advantageous in that it is no need to concern about the risk of galvanic corrosion and excellent in high rate discharge performance. Further, the lead-acid batteries 10 of Examples 5 to 7 cannot efficiently exhibit the storage battery performance in accordance with the object contact body, they have an advantage that the weights are lightweight and the production costs are low as compared with those of batteries of other Examples.

### (6) Conclusion

According to the invention, a lead-acid battery 10 having low inner resistance and excellent in output performance can be obtained. Further, negative substrate materials can be selected in accordance with the uses and installation sites.

### 4. Investigation of lead-acid battery having bipolar electrode plate 61

### (1) Production of bipolar electrode plate 61

First, a tin dioxide layer 24 was formed by the following method on both faces of a bipolar substrate 62 with length 10 cm × width 10 cm × thickness 100 µm and made of titanium.

Triphenylantimony in an amount to give the antimony content of 5% by mass based on the tin element in a raw material solution was dissolved in a solution obtained by dissolving dibutyltin diacetate in ethanol in an amount to give the amount of 2.5% by mass of tin dioxide based on the raw material solution to prepare the raw material solution.
A substrate 62 made of titanium was dipped in the raw material solution and calcined at 500°C to form an antimony-containing tin dioxide layer 24 with a film thickness of 20 nm was formed on both faces of the substrate 62.
A positive active material 32 with length 7 cm × width 7 cm × thickness 1.6 mm and mainly containing lead dioxide was arranged on one face of the substrate 62. A carbon black-containing conductive resin film 21 made of polypropylene and covering the tin dioxide layer 24 was layered on the other face of the substrate 62 and further a negative active material 22 with length 7 cm × width 7 cm × thickness 1.3 mm and mainly containing sponge-form lead was further arranged to produce a bipolar electrode plate 61.

### (2) Investigation of specific gravity of electrolyte solution

Using this bipolar substrate 62, the positive electrode plate produced in 3. (1-1), and the negative electrode plate produced in 3. (2-2), as well as glass mat separators 15 absorbing and retaining electrolyte solutions with specific gravities of 1.200, 1.250, 1.300, 1.350, 1.400, 1.450, and 1.500 at 20°C in a fully charged state, controlled valve type lead-acid batteries of Embodiment 5 (nominal voltage: 12V, 20 hour rate-rated capacity: C = 2Ah) were produced and made as batteries B1, B2, B3, B4, B5, B6, and B7. A copper plate with a thickness of 0.8 mm was used as a pressing member as the outer pressing means and auxiliary pressing members were installed in the outside thereof to pinch and press 6 cells and fix the cells using bolts and nuts made of metals.
The pressing degree of these batteries was 400 kPa by gauge pressure.

For the batteries B1 to B7, a charge/discharge cycle life test was carried out by the same manner as that for the above-mentioned assembled batteries T1 to T7 and the results were shown in Table 11.

**[Table 11]**

| Battery No. | Specific gravity of electrolyte solution (20°C) | Number of cycles |
|---|---|---|
| B1 | 1.200 | 345 |
| B2 | 1.250 | 2168 |
| B3 | 1.300 | 2175 |
| B4 | 1.350 | 2134 |
| B5 | 1.400 | 2072 |
| B6 | 1.450 | 2084 |
| B7 | 1.500 | 2026 |

The assembled battery B1 containing the electrolyte solution with a specific gravity of 1.200 at 20°C in a fully charged state was terminated at 345th cycle in the charge/discharge cycle life test. It was found out by disassembly investigation that the termination cause of the battery B1 was due to deterioration of the positive electrode plate caused by dissolution of the tin dioxide layer formed on the substrate surface of titanium.

The assembled batteries B2, B3, B4, B5, B6, and B7 of the invention containing the electrolyte solutions with specific gravities in a range of 1.250 to 1.500 at 20°C in a fully charged state were terminated due to the softening of the positive active material in about 2000 cycles in the charge/discharge cycle life test. From this result, it can be said that the lead-acid batteries having the bipolar substrates of the invention have excellent charge/discharge cycle life performance.

### (3) Measurement of inner resistance

With respect to the lead-acid battery B4 of Embodiment 5 produced in (2), the resistance between the pressing members 41 was measured by the method of 2. (1) to find out that it was 46.5 mΩ.
It was found out that the weight of the battery was 95 in a case where the weight of the battery obtained by connecting 3 lead-acid batteries of Example 2 in series was set to be 100.
According to the above description, it was found out that that the inner resistance could be lowered and the weight could be made lightweight for the batteries using the bipolar electrode plates.

### <Other embodiment>

The invention should not be limited to the above description and the embodiments with reference to drawings and, for example, the following embodiments are also included within a technical scope of the invention. (1) Although the examples combining 6 cells are exemplified in Embodiment 1 and the examples combining 3 cells are exemplified in Example 1, the number of the cells to be used as an assembled battery is not limited to 6 or 3 as long as the cells are 2 or more.

(2) In the above-mentioned examples, materials made of lead-plated copper, materials made of copper, and materials made of titanium were used as the negative substrate materials; however, any one of lead, tin, and zinc or an alloy containing two or more kinds of these metals may be used as the negative substrate materials (for example, brass (alloy of copper and zinc), bronze (alloy of copper and tin), lead-tin alloy, etc.) may be used.

(3) In the above-mentioned examples, copper plates or stainless steel plates were used as the pressing members and auxiliary pressing members were installed in the outside thereof to pinch and press controlled valve type lead-acid batteries and fix the batteries using bolts and nuts made of metals; however the fixing means is not limited thereto. For example, without using the auxiliary pressing members, the controlled valve type lead-acid batteries can be fixed by fixing the pressing members with bolts and nuts made of resin and also by fixing the pressing members in the battery containers by screws. Further, without using screws, caulking may be employed.

(4) In the above-mentioned examples, although a substrate made of titanium was used as the positive substrate, examples usable as a material for the positive substrate may include titanium-containing alloys such as Ti-5Al-2.5 Sn, Ti-3Al-2.5V, and Ti-6Al-4V lead, aluminum, stainless steel, and iron. Among these substrate materials, since titanium, stainless steel, and iron are high melting point (melting point 500°C or higher) materials, a tin dioxide layer can be formed by a coating-thermal decomposition method and therefore, the capital-investment spending can be suppressed low. Further, among the substrate materials, since lead and titanium are excellent in sulfuric acid resistance, they are excellent in life performance.

(5) In Embodiment 3, although the positive substrate bearing a tin dioxide layer formed on one face is described; a positive substrate bearing the tin dioxide layer on both faces may be used.

(6) In Embodiment 4, although the negative substrate bearing an antimony-containing tin dioxide layer formed on one face is described; the tin dioxide layer may further contain fluorine in addition to antimony. Further a negative substrate bearing the tin dioxide layer on both faces may be used.

(7) In Embodiment 5, although terminals (pressing members) are installed besides the positive substrate and the negative substrate, the positive substrate may be used as the positive electrode terminal and the negative substrate may be used as the negative electrode terminal. When such a configuration is made, since the substrates are served as terminals, there is no need to separately install terminals and the number of the parts can be saved and the cost can be reduced and therefore, it is preferable.

(8) In Embodiment 5, although those having the tin dioxide layer on both faces in all of the positive substrate, the negative substrate, and the bipolar substrate are exemplified, with respect to the positive substrate and the negative substrate, those having the tin dioxide layer on one face brought into contact with the active materials may be used.

(9) In the above-mentioned embodiments, examples of using the invention for the controlled valve type lead-acid batteries are described; however the invention may also be applicable for lead-acid batteries having no control valve, for example, liquid-type lead-acid batteries.

## Claims

1. Alead-acid battery comprising a positive electrode plate and an electrolyte solution, wherein
said positive electrode plate has a positive substrate bearing a tin dioxide layer on the surface and
said electrolyte solution has a specific gravity in a range of 1.250 to 1.500 at 20°C in a fully charged state.

2. The lead-acid battery according to claim 1, wherein said positive substrate is made of titanium or a titanium-containing alloy.

3. The lead-acid battery according to claim 1 or 2 comprising a separator retaining said electrolyte solution, a negative electrode plate arranged opposite to said positive electrode plate with said separator interposed therebetween, and a battery container for holding said positive electrode plate, said separator, and said negative electrode plate, wherein
said positive electrode plate has a positive substrate having a positive active material on one face,
in said positive substrate, said tin dioxide layer is formed at least on said face having said positive active material on said positive substrate and said positive active material has contact with the tin dioxide layer formed on the face having said positive active material,
said negative electrode plate has a negative substrate and a negative active material on one face side of said negative substrate,
said positive active material, said separator, and said negative active material are layered in this order, so that said positive substrate and said negative substrate are arranged in the outer side than said positive active material and said negative active material,
said battery container has an insulating container main body surrounding said positive active material, said separator, and said negative active material and having a form opened in the parts for arranging said positive substrate and said negative substrate, and
said positive substrate and said negative substrate are served as parts of said battery container.

4. The lead-acid battery according to claim 3, wherein said negative substrate is made of lead or a lead-plated copper and said negative active material is brought into contact with said negative substrate.

5. The lead-acid battery according to claim 3, wherein said negative electrode plate is provided with a carbon material-containing conductive resin film between said negative substrate and said negative active material and said negative substrate is made of any one of copper, lead, tin, and zinc or an alloy containing two or more kinds of these metals.

6. The lead-acid battery according to claim 3, wherein said negative substrate is a substrate made of a carbon material-containing conductive resin.

7. The lead-acid battery according to claim 6, wherein the average thickness of said substrate made of a carbon material-containing conductive resin is 80 µm or thicker and 1 mm or thinner.

8. The lead-acid battery according to claim 3, wherein said negative substrate is made of titanium or a titanium-containing alloy and said negative electrode plate is constituted by successively layering said negative substrate, an antimony-containing tin dioxide layer with an average thickness of 10 nm or thicker and 50 µm or thinner, a carbon material-containing conductive resin film, and said negative active material.

9. The lead-acid battery according to any one of claims 1 to 8, wherein said tin dioxide layer of said positive substrate is formed on both faces of said positive substrate.

10. The lead-acid battery according to any one of claims 1 to 9, wherein the average thickness of said tin dioxide layer of said positive substrate is 10 nm or thicker and 50 µm or thinner.

11. The lead-acid battery according to any one of claims 1 to 10, wherein said tin dioxide layer of said positive substrate contains antimony and fluorine.

12. The lead-acid battery according to any one of claims 8 to 11, wherein a tin dioxide layer is formed on both faces of said negative substrate.

13. The lead-acid battery according to any one of claims 8 to 12, wherein the average thickness of said tin dioxide layer of said negative substrate is 10 nm or thicker and 50 µm or thinner.

14. The lead-acid battery according to any one of claims 8 to 13, wherein said tin dioxide layer of said negative substrate contains antimony and fluorine.

15. The lead-acid battery according to any one of claims 3 to 14, comprising an active material retaining body made of lead or a lead alloy for retaining said positive active material and said negative active material.

16. The lead-acid battery according to any one of claims 3 to 15, wherein said positive substrate is a positive electrode terminal and said negative substrate is a negative electrode terminal.

17. An assembled battery obtained by connecting a plurality of said lead-acid batteries according to claim 16, wherein said positive electrode terminal of said lead-acid battery is brought into contact with said negative electrode terminal of a neighboring lead-acid battery.

18. A lead-acid battery comprising a positive electrode plate, a negative electrode plate, a bipolar electrode plate, an electrolyte solution, and a separator for retaining said electrolyte solution, wherein
said positive electrode plate has a positive substrate and a positive active material on one face of said positive substrate,
in said positive substrate, a tin dioxide layer is formed at least on the face having said positive active material on said positive substrate and said positive active material has contact with the tin dioxide layer formed on the face having said positive active material,
said negative electrode plate is obtained by layering a negative substrate, a carbon material-containing conductive film, and a negative active material in this order,
said bipolar electrode plate is obtained by layering a positive active material, a bipolar substrate bearing a tin dioxide layer on both faces, a carbon material-containing conductive resin film, and a negative active material in this order,
the positive active material of a neighboring electrode plate is layered on the negative active material of said bipolar electrode plate with said separator interposed therebetween and the negative active material of a neighboring electrode plate is layered on the positive active material of said bipolar electrode plate with said separator interposed therebetween, and
said electrolyte solution has a specific gravity in a range of 1.250 to 1.500 at 20°C in a fully charged state.

19. The lead-acid battery according to claim 18, wherein said bipolar substrate is made of titanium or a titanium-containing alloy and the tin dioxide layer formed on the face of the bipolar substrate where said conductive resin film is layered has an average thickness of 10 nm or thicker and 50 µm or thinner and contains antimony.

20. The lead-acid battery according to claim 18 or 19 comprising a plurality of layers of lead-acid batteries each having a battery container holding one of electrode plates selected from a positive electrode plate, a negative electrode plate, and a bipolar electrode plate, a bipolar electrode plate, and said separator, wherein
said battery container has an insulating container main body surrounding said positive active material, said separator, and said negative active material and having a form opened in the parts for arranging said positive substrate and said negative substrate, and
said substrates are served as parts of said battery container.

21. The lead-acid battery according to any one of claims 18 to 20, wherein said positive substrate is made of titanium or a titanium-containing alloy.

22. The lead-acid battery according to any one of claims 18 to 21, wherein a tin dioxide layer is formed on both faces of one or more substrates selected from said positive substrate and said negative substrate.

23. The lead-acid battery according to any one of claims 18 to 22, wherein the average thickness of said tin dioxide layer of one or more substrates selected from said positive substrate and said negative substrate is 10 nm or thicker and 50 µm or thinner.

24. The lead-acid battery according to any one of claims 18 to 23, wherein one or more tin dioxide layers selected from the tin dioxide layer of said positive substrate, the tin dioxide layer of said negative substrate, and the tin dioxide layer of the bipolar substrate contain antimony and fluorine.

25. The lead-acid battery according to any one of claims 18 to 24, comprising an active material retaining body made of lead or a lead alloy for retaining said positive active material or said negative active material.

26. The lead-acid battery according to any one of claims 18 to 25, wherein said positive substrate is used as a positive electrode terminal and said negative substrate is used as a negative electrode terminal.
